# EUROPEAN PATENT APPLICATION

(11) **EP 4 708 966 A1**
(43) Date of publication of application: **11.03.2026**
(21) Application number: 24839970.1
(22) Date of filing: 02.07.2024
(51) Int. Cl.: H04W 36/18, H04W 36/00, H04W 36/08, H04W 76/15, H04W 84/12, H04W 36/30, H04W 88/06

(54) **METHOD AND APPARATUS FOR DETERMINING MLD ROAMING ON BASIS OF COLLOCATION WITH ANOTHER AP IN WIRELESS LAN SYSTEM**

(30) Priority: 10.07.2023 KR 20230089257; 25.09.2023 KR 20230128543
(71) Applicant: LG Electronics Inc., Yeongdeungpo-gu Seoul 07336 (KR)
(72) Inventor: YOON, Yelin, Seoul 06772 (KR); JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); CHA, Dongju, Seoul 06772 (KR)
(74) Representative: Frenkel, Matthias Alexander
(86) International application number: PCT/KR2024/009311
(87) International publication number: WO 2025/014157

(57) **Abstract**

Proposed are a method and an apparatus for determining MLD roaming on the basis of collocation with another AP in a wireless LAN system. Specifically, a first non-AP STA receives a beacon frame from a first AP. The first non-AP STA determines roaming from the first AP to a third AP on the basis of the beacon frame. The beacon frame includes a first indicator bit. The first indicator bit includes information about whether the third AP is included in the same collocated AP set as the first AP.

## Description

### TECHNICAL FIELD

This specification relates to a technique for determining MLD roaming based on whether or not there is collocation with another AP in a wireless LAN system, and more specifically, to a method and device for determining whether or not a currently connected AP and another AP to be roamed are co-located with each other by defining an indicator bit in a beacon frame.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device for determining MLD roaming based on whether or not there is collocation with another AP in a wireless LAN system.

### TECHNICAL SOLUTION

An example of this specification proposes a method for determining MLD roaming based on whether or not there is collocation with another AP.

This embodiment may be performed in a network environment that supports a next-generation wireless LAN system (Ultra High Reliability (UHR) wireless LAN system or next Wi-Fi). The next-generation wireless LAN system is an improved version of the 802.1 The system and can satisfy backward compatibility with the 802.1 The system.

This embodiment is performed in a receiving STA, and the receiving STA may correspond to at least one station (STA). The transmitting STA may correspond to an access point (AP).

This embodiment proposes a method for determining MLD roaming based on whether the current AP is collocated with another AP. The MLD roaming allows seamless movement from one AP to another without any disconnection between the AP and the STA. In particular, this embodiment effectively prevents unnecessary roaming to APs by identifying information about APs that are physically close and therefore do not require the MLD roaming.

A first non-access point station (non-AP STA) receives a beacon frame from a first AP.

The first non-AP STA determines whether to roam from the first AP to a third AP based on the beacon frame.

The first AP operating on a first link and a second AP operating on a second link are affiliated with a first AP MLD. The first non-AP STA operating on the first link and a second non-AP STA operating on the second link are affiliated with a first non-AP MLD.

The third AP is affiliated with a second AP MLD. The first and second AP MLDs are included in a roaming-enabled group.

The beacon frame includes a first indicator bit.

The first indicator bit includes information on whether the third AP is included in the same collocated AP set as the first AP. Based on the first and third APs being included in the same collocated AP set, the first and third APs may be determined to be physically adjacent to each other. Conversely, based on the first and third APs not being included in the same collocated AP set, the first and third APs may be determined to be physically non-adjacent.

The first indicator bit may be information on Collocation enabled or information on a Collocation ID. Based on the first indicator bit being set to 1, it may be determined that the third AP is included in the same collocated AP set as the first AP. Based on the first indicator bit being set to 0, it may be determined that the third AP is not included in the same collocated AP set as the first AP. Alternatively, it may be set vice versa.

Based on the third AP being included in the same collocated AP set as the first AP, the first non-AP STA may not perform roaming from the first AP to the third AP.

That is, the present embodiment proposes a method for confirming information on APs that are physically adjacent and do not require MLD roaming through a beacon frame. In particular, the present disclosure proposes a method for confirming whether the currently connected AP and another AP to be roamed are collocated by defining an indicator bit in the beacon frame.

### ADVANTAGEOUS EFFECTS

According to the embodiment proposed in this specification, unnecessary roaming to other APs that are located in parallel with the currently connected AP can be prevented, thereby increasing the overall operational efficiency.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an over-the-air (OTA) FT protocol in a Robust Security Network (RSN).
FIG. 16 illustrates a high-level architecture for an AP MLD.
FIG. 17 illustrates an example of a high-level architecture for an UHR AP MLD.
FIG. 18 illustrates another example of a high-level architecture for an UHR AP MLD.
FIG. 19 illustrates an example of a roaming architecture in an AP MLD domain.
FIG. 20 illustrates an example of an RNR IE.
FIG. 21 illustrates another example of an RNR IE.
FIG. 22 shows another example for the RNR IE.
FIG. 23 illustrates an example of the Common Info field of the Reconfiguration Multi-link IE proposed in this embodiment.
FIG. 24 illustrates an example of the Link Info field of the Reconfiguration Multi-link IE proposed in this embodiment.
FIG. 25 illustrates an example of including a UHR AP MLD ID and an AP MLD ID in the Common Info field of the Reconfiguration Multi-link IE proposed in this embodiment.
FIG. 26 illustrates an example of including an AP MLD ID in the Common Info field of the Reconfiguration Multi-link IE proposed in this embodiment.
FIG. 27 illustrates an example of including a UHR AP MLD ID and an AP MLD ID in the Link Info field of the Reconfiguration Multi-link IE proposed in this embodiment.
FIG. 28 illustrates an example of including an AP MLD ID in the Link Info field of the Reconfiguration Multi-link IE proposed in this embodiment.
FIG. 29 illustrates another example of including a UHR AP MLD ID and an AP MLD ID in the Link Info field of the Reconfiguration Multi-link IE proposed in this embodiment.
FIG. 30 illustrates another example of including an AP MLD ID in the Link Info field of the Reconfiguration Multi-link IE proposed in this embodiment.
FIG. 31 illustrates an example of including a Temporary field in the Common Info field of the Reconfiguration Multi-link IE proposed in this embodiment.
FIG. 32 illustrates an example of including a Temporary field in the Link Info field of the Reconfiguration Multi-link IE proposed in this embodiment.
FIG. 33 illustrates another example of including a Temporary field in the Link Info field of the Reconfiguration Multi-link IE proposed in this embodiment.
FIG. 34 illustrates an example of the Group Key Information field.
FIG. 35 illustrates a procedure for determining whether an N_AP is capable of roaming using the Collocation Enabled field.
FIG. 36 illustrates a procedure for determining whether an N_AP is capable of roaming using the Collocation ID.
FIG. 37 illustrates an MLD Roaming procedure when a UHR AP MLD ID is included in the Reconfiguration element.
FIG. 38 illustrates an MLD Roaming procedure when a UHR AP MLD ID is not included in the Reconfiguration element.
FIG. 39 illustrates an example of a collocated AP set.
FIG. 40 illustrates Example 1 of the MLD Roaming procedure.
FIG. 41 illustrates the operation process of Example 1 of the MLD Roaming procedure.
FIG. 42 illustrates Example 2 of the MLD Roaming procedure.
FIG. 43 illustrates the operation process of Example 2 of the MLD Roaming procedure.
FIG. 44 illustrates Example 3 of the MLD Roaming procedure.
FIG. 45 illustrates the operation process of Example 3 of the MLD Roaming procedure.
FIG. 46 illustrates an example of MLD Roaming using TIM.
FIG. 47 illustrates the operation process of the MLD Roaming procedure using TIM.
FIG. 48 is a flowchart illustrating the operation of a transmitting device according to the present embodiment.
FIG. 49 is a flowchart illustrating the operation of a receiving device according to the present embodiment.
FIG. 50 is a flowchart illustrating a procedure for determining MLD roaming based on whether an AP is collocation with another AP according to the present embodiment.
FIG. 51 is a flowchart illustrating a procedure for determining MLD roaming based on whether an STA is collocation with another AP according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11 a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

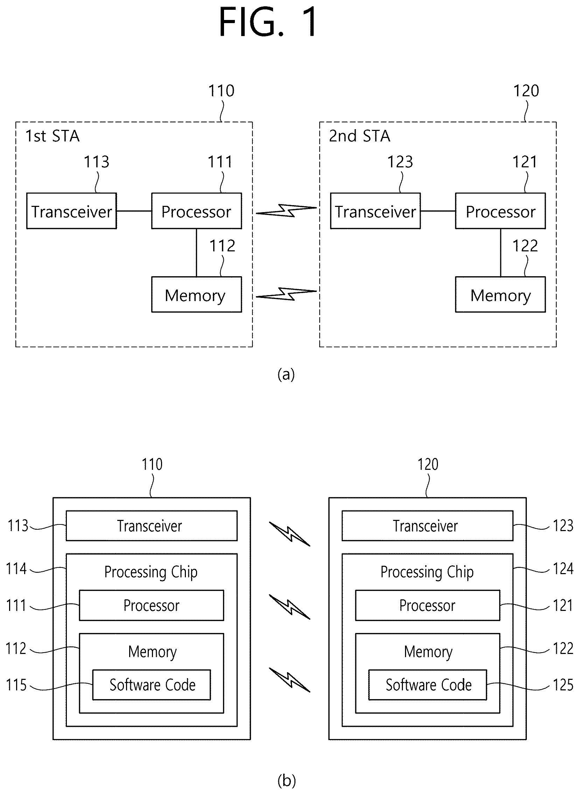

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors **111** and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

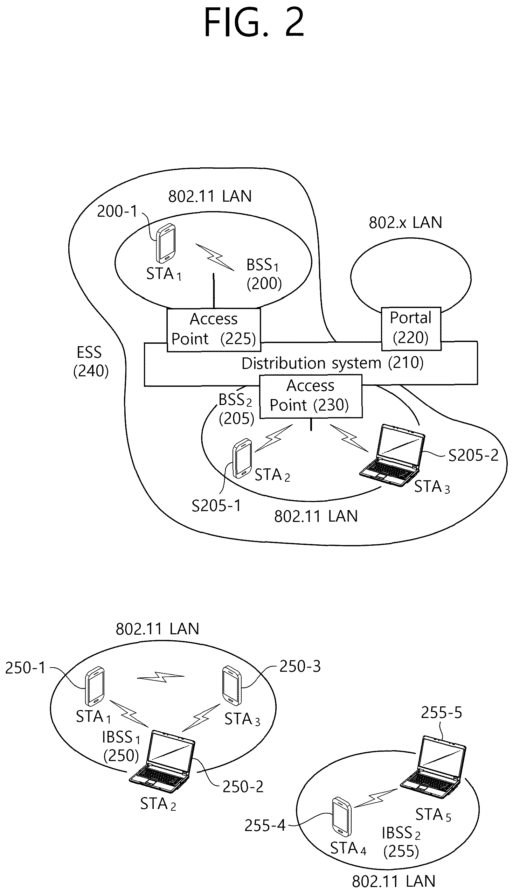

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

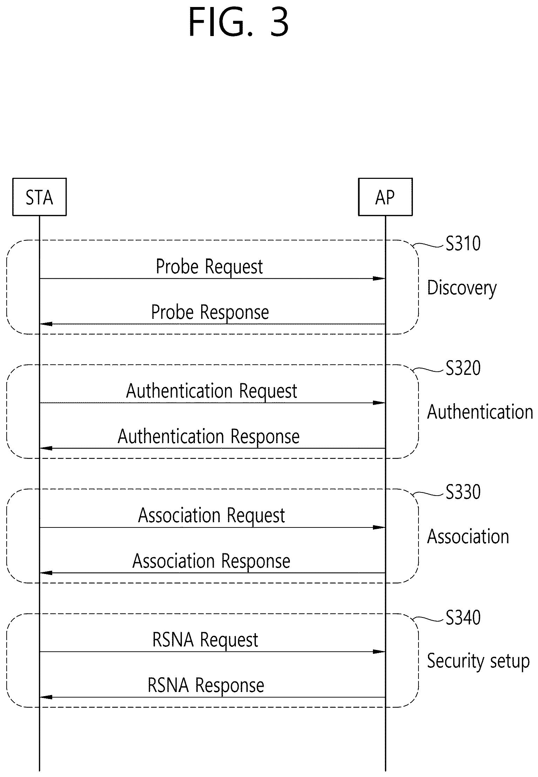

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

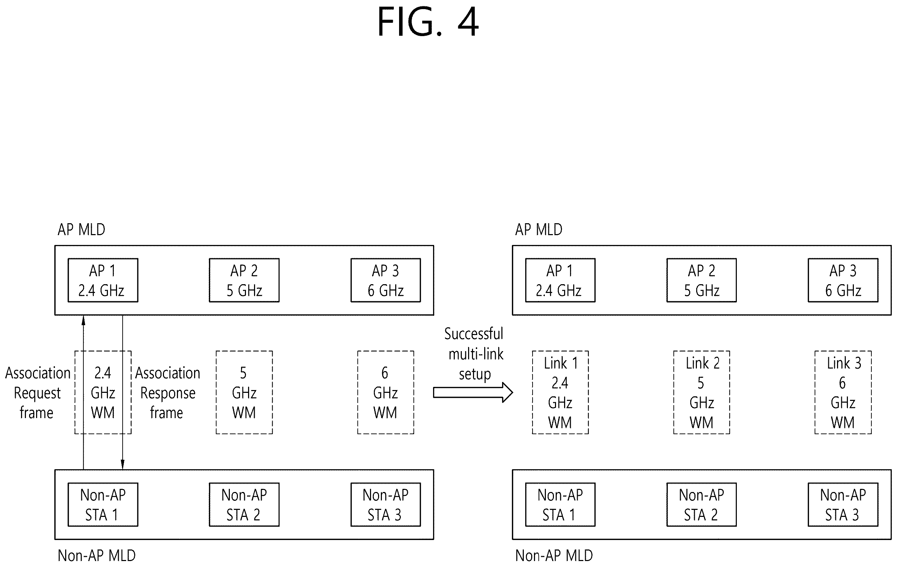

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

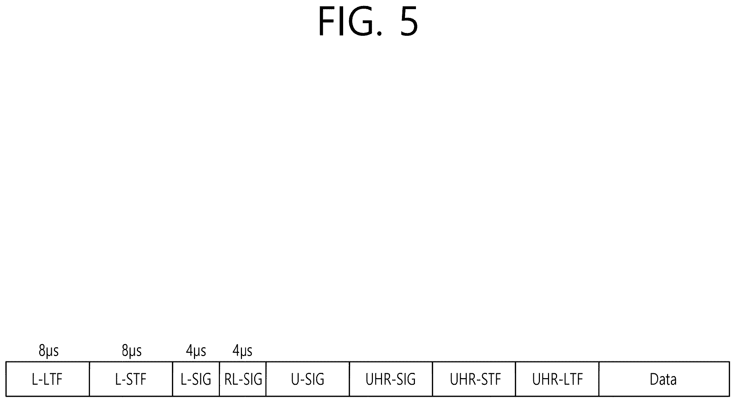

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.1 1bn and/or a next-generation WLAN system that improves IEEE 802.11bn.

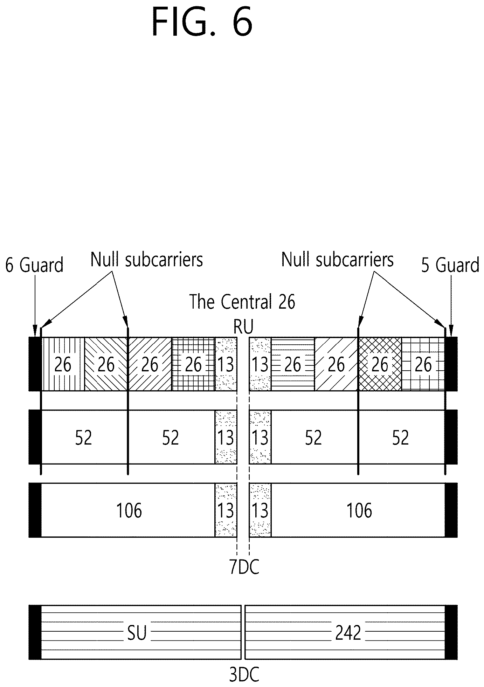

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

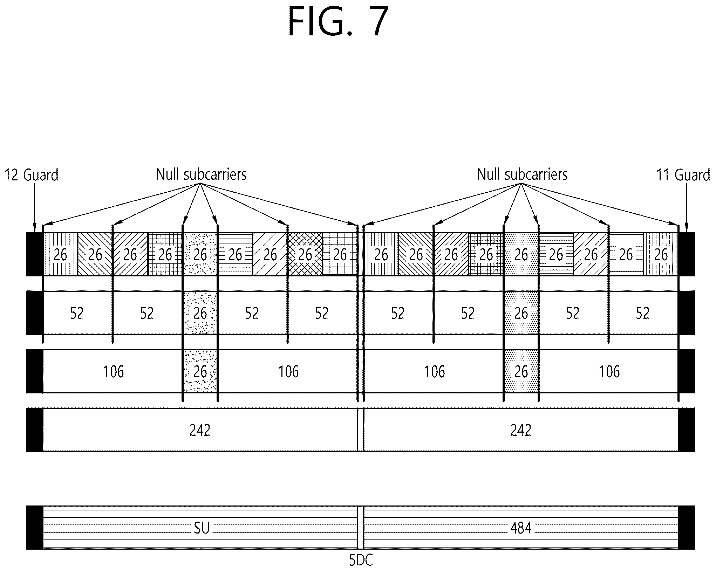

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

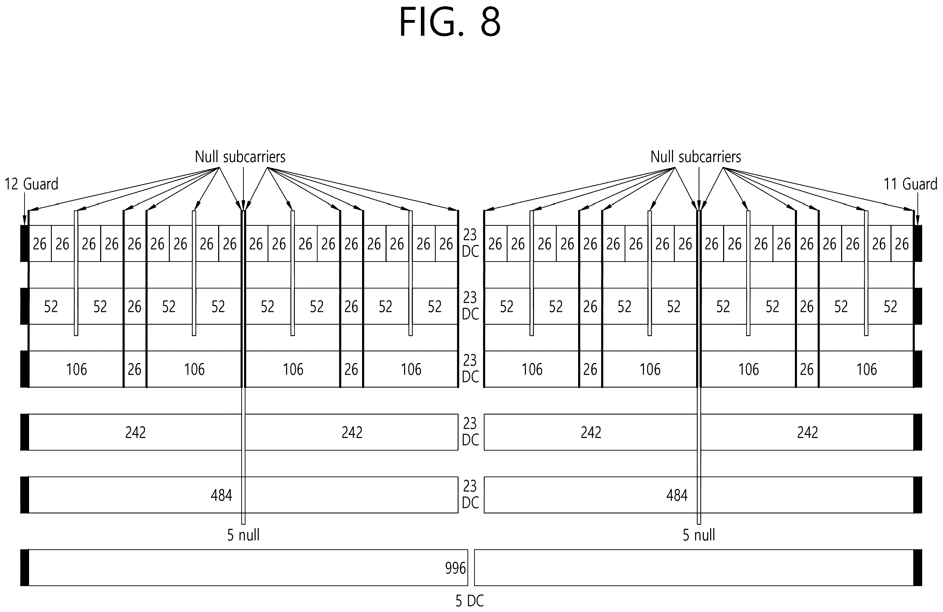

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

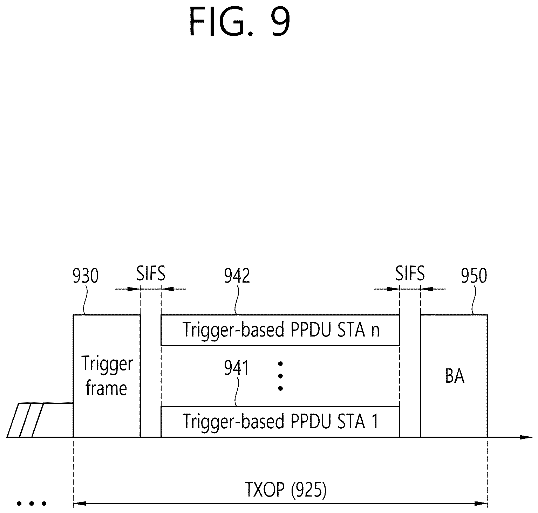

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

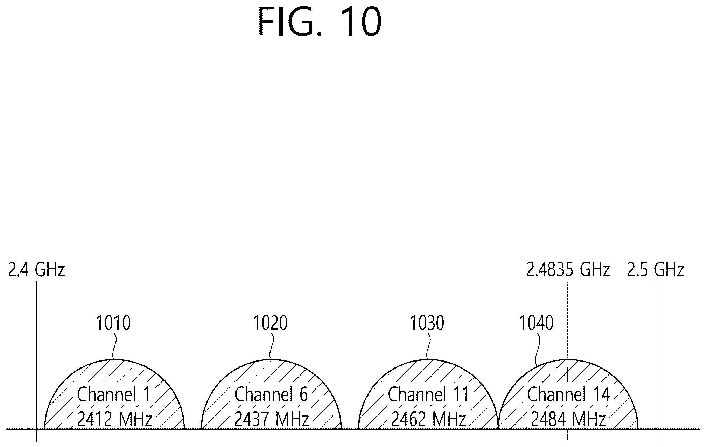

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

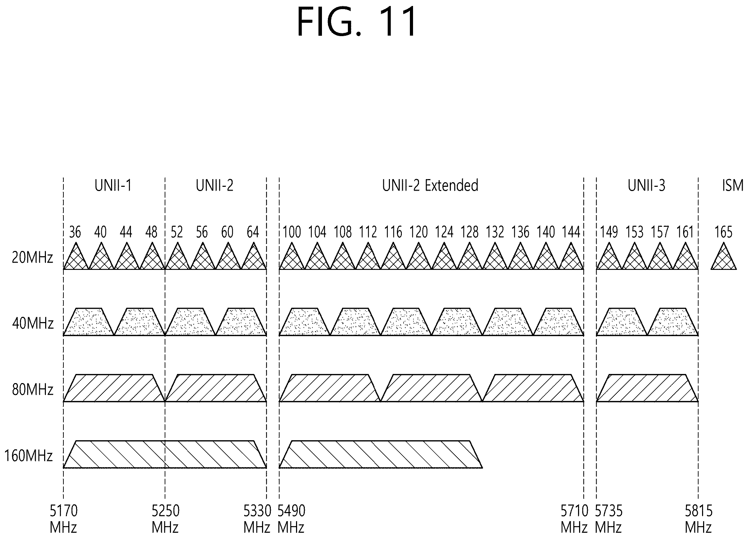

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

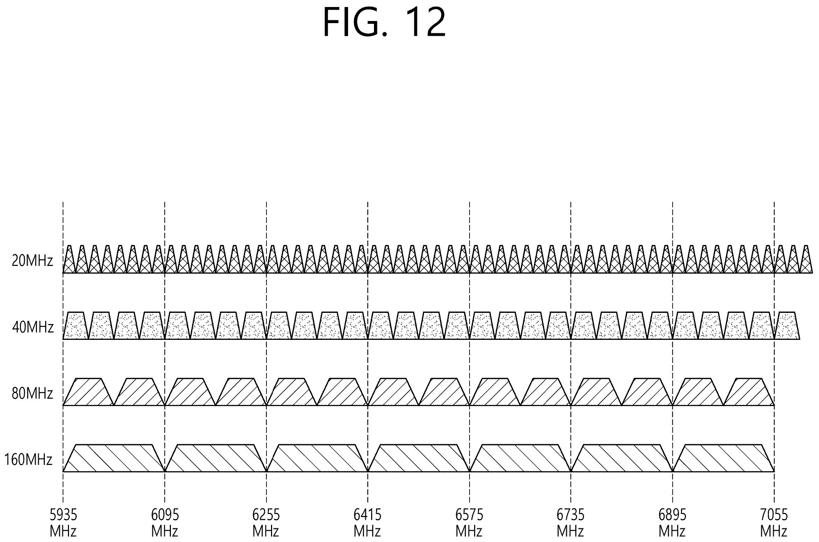

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

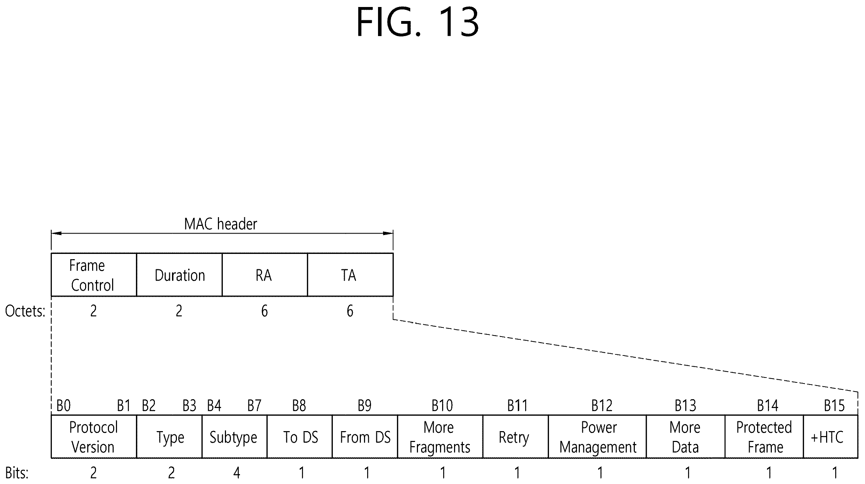

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response (0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

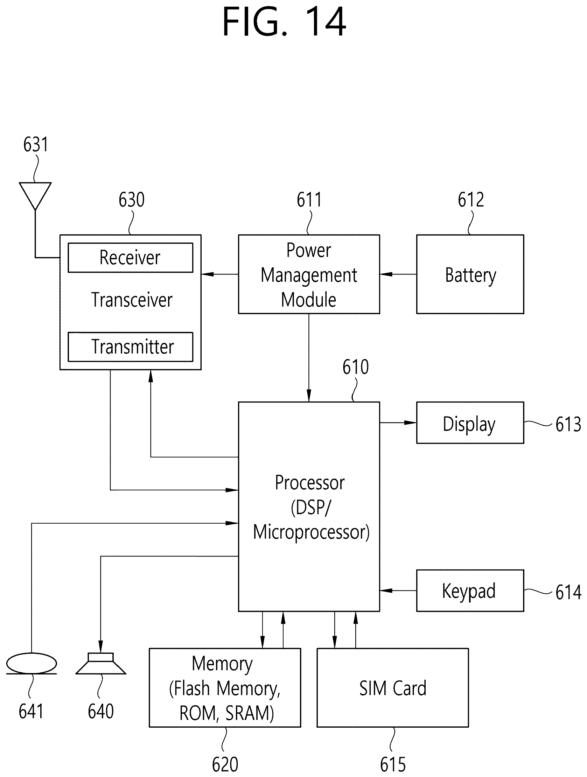

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

### 1. Problems with prior art (Fast BSS Transition (FT))

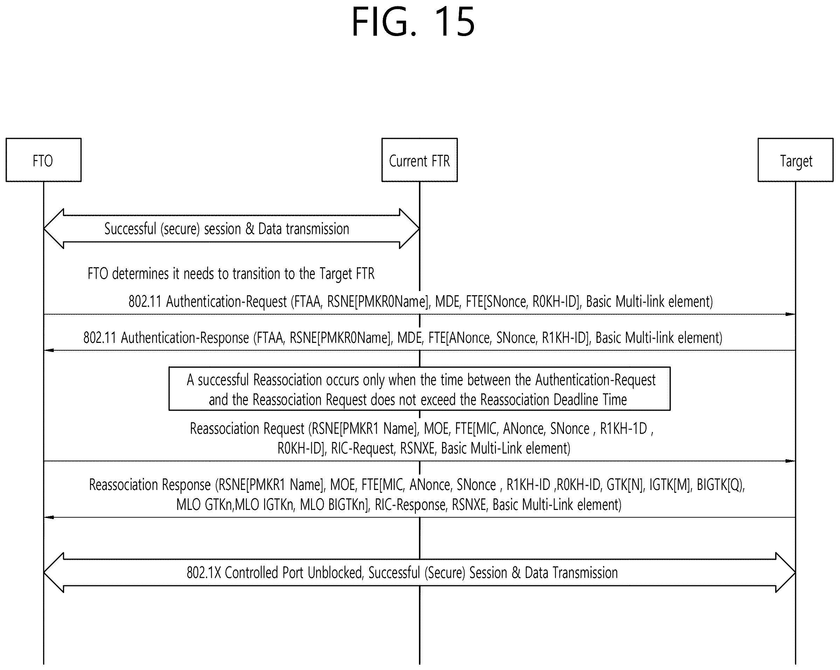

FIG. 15 illustrates an over-the-air (OTA) FT protocol in a Robust Security Network (RSN).

Currently, in 802.11, when a non-AP STA moves (roams) from an AP (Old AP) to another AP (New AP), i.e., for a BSS (Basic Service Set) Transition, it must go through a reassociation process in the same mobility domain. A representative example is the Fast BSS Transition (FT) technology. In FT, as shown in FIG. 15, several processes such as authentication and reassociation are performed with the FT Originator (FTO) and the Target FT Responder (FTR) (i.e., the New AP).

After this process, many operational parameters such as Agreement, Sequence Number (SN), EDCAF Parameter, etc. related to BlockAck (BA), Stream Classification Service (SCS), etc. are reset. Accordingly, there is an overhead that requires re-performing agreement/configuration along with multiple frame exchanges, and data loss may also occur during the FT process. Furthermore, from the perspective of a non-AP STA, seamless roaming without interruption is not easy. Therefore, this specification proposes a seamless roaming method utilizing AP MLD (Multi-Link Device) to solve this problem. Unlike FT, roaming does not require re-authentication/association.

In this specification, an STA performing BSS Transition (i.e., Roaming) is referred to as an RSTA, the AP to which the STA is currently associated when roaming is referred to as an Old AP (O_AP), and the AP to which the STA will roam is referred to as a New AP (N_AP). In addition, the Roaming method proposed in this specification is referred to as MLD Roaming. The designations (names) in this specification may be changed, and an STA may include an AP STA or a non-AP STA.

### 2. UHR AP MLD Structure for Roaming

### 2.1 General Procedure of Roaming in AP MLD

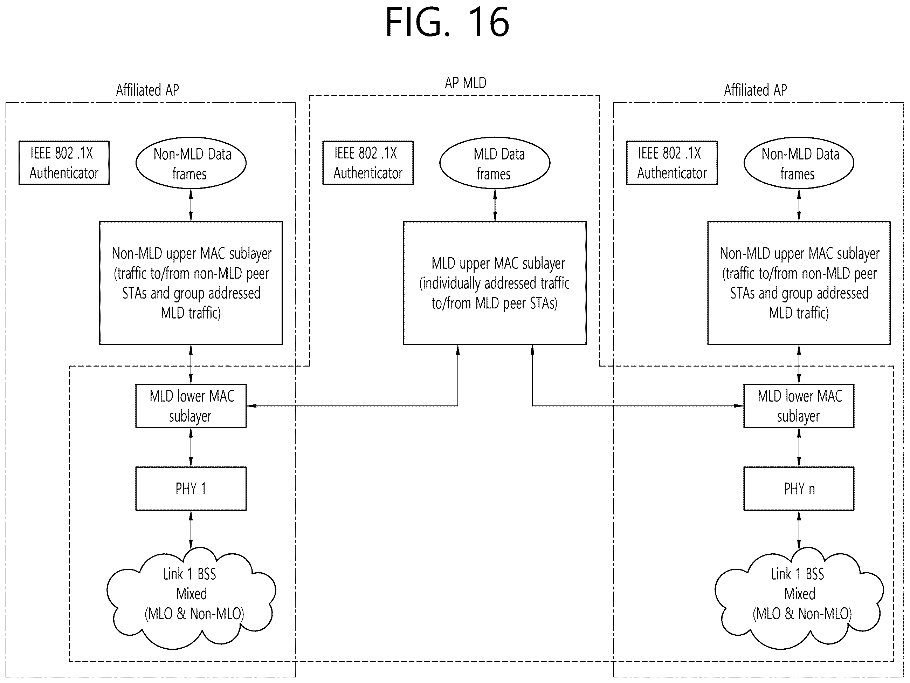

FIG. 16 illustrates a high-level architecture for an AP MLD.

Basically, an AP MLD can include one or more APs and has a high-level architecture as shown in FIG. 16. Basically, the MLD can control several procedures/parameters common to multiple APs using the upper MAC sublayer. Examples of these procedures/parameters include authentication, association, SN/PN assignment, and power-save buffering of individually addressed frames.

Therefore, by utilizing AP MLD functionality, MLD-level parameters can be maintained without being reset when moving between APs (affiliated APs) involved in AP MLD. This specification proposes a roaming method utilizing AP MLD functionality.

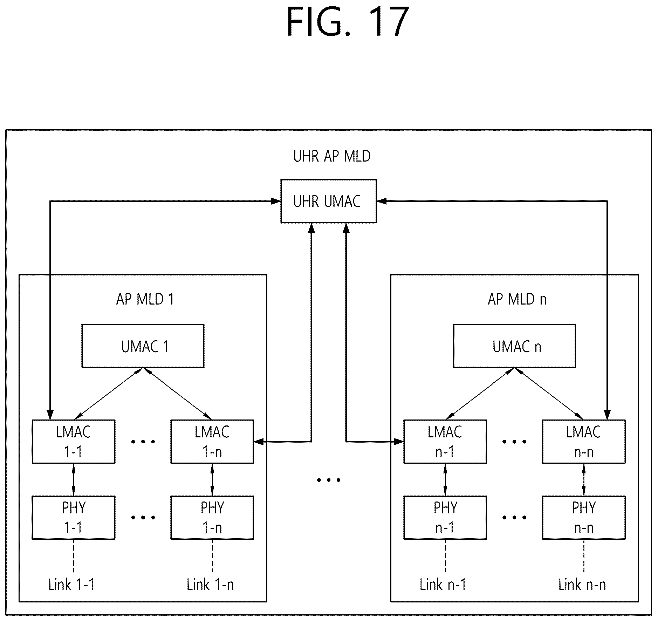

FIG. 17 illustrates an example of a high-level architecture for an UHR AP MLD.

FIG. 17 illustrates the architecture of APs supporting Seamless Roaming. To support Seamless Roaming, it must be compatible with devices from previous standard versions and enable seamless roaming between multiple devices. First, to ensure legacy compatibility with older devices, non-UHR non-AP STAs must be able to see non-UHR APs. This requires maintaining the MLD definition itself and modifying the existing architecture. Therefore, as shown in FIG. 17, we define a new UHR AP MLD that maintains the existing MLD architecture while hierarchically affiliates MLDs that support seamless roaming. Each LMAC of the AP MLDs interfaces with a UHR UMAC, and the functions of the UMAC of the AP MLD supporting seamless roaming are managed by the UHR UMAC. This architecture also addresses scalability issues caused by the limitations of the Link ID bit size. By default, the Link ID is 4 bits, supporting a maximum of 16 Link IDs. When roaming, a Link ID is required to move from one link to another. However, the existing method limits the number of APs available for roaming to 16. To address this issue, Link IDs are tied to AP MLD IDs, addressing scalability issues. This is described in more detail in Section 2.2.

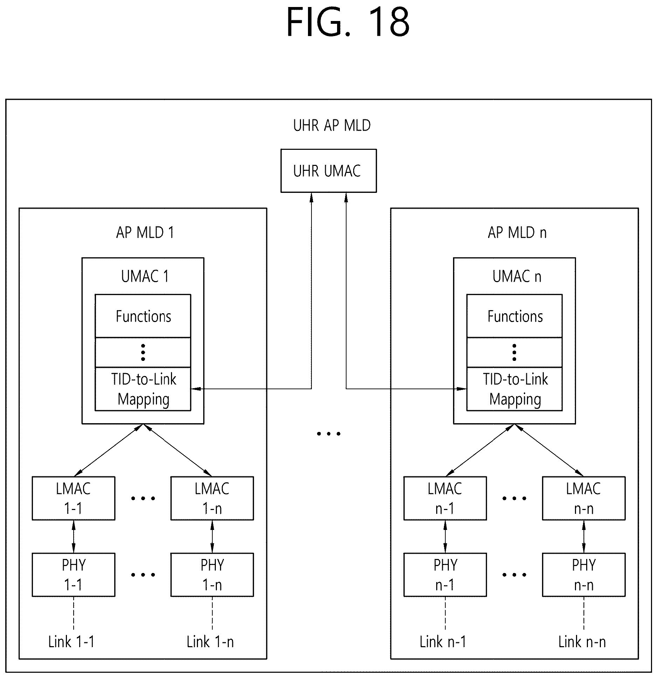

FIG. 18 illustrates another example of a high-level architecture for an UHR AP MLD.

FIG. 18 shows an example with a similar architecture to FIG. 17 but with different interfacing. In FIG. 18, the LMAC of the AP MLD and the UHR UMAC are not directly connected, but are interfaced to the TID-to-Link Mapping function of the UMAC. This architecture allows TID-to-Link Mapping to be performed individually in the UMAC of the AP MLD or in the UHR UMAC. The method of use of this architecture and the types and number of functions interfaced with the UHR UMAC are not limited.

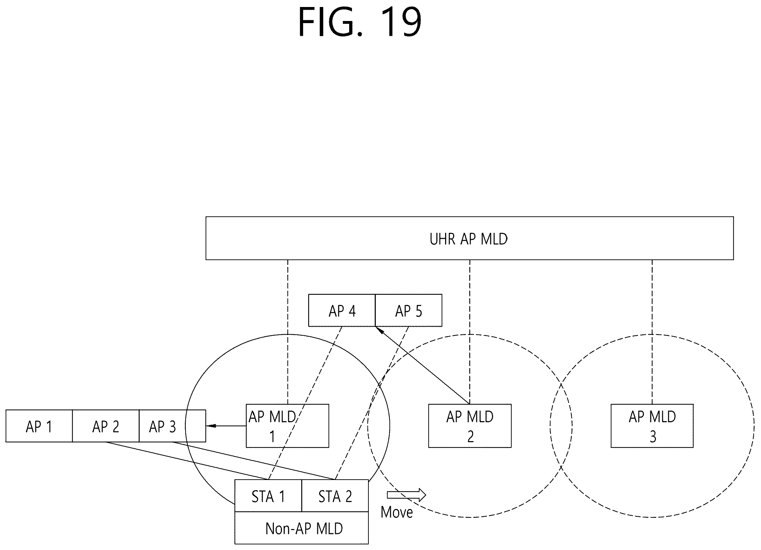

FIG. 19 illustrates an example of a roaming architecture in an AP MLD domain.

FIG. 19 illustrates the structure and process for basic roaming.

Each AP MLD is located in a different location (i.e., non-collocated), and the APs within each AP MLD are located in the same or similar locations (i.e., collocated). This collocated status can mean belonging to the same physical device, or it can mean belonging to a logically similar location, even if not a physical device. Since an AP MLD is a logical entity, it can be any physical device. However, regardless of location, it can operate as an MLD that includes affiliated APs and supports multi-link operation (MLO). Ultimately, all APs within each AP MLD become affiliated APs of a single AP MLD. For example, AP MLD 1 in FIG. 19 includes affiliated APs 1, 2, and 3.

Based on FIG. 19, when a non-AP MLD moves, it will typically roam from one AP MLD to another. For example, if a non-AP MLD is configured with a multi-link setup with an AP MLD, and STA 1 and STA 2 are connected to AP 2 and AP 3 of AP MLD 1, and roaming to AP MLD 2 occurs, STA 1 may be connected to AP 4 and STA 2 may be connected to AP 5. In this case, each STA may temporarily associate with AP 4 and AP 5 so that AP 4 and AP 5 can transmit frames to each STA during the roaming process.

For reference, in FIG. 19, this architecture can be applied to a non-AP MLD with one affiliated STA, not a non-AP MLD with multiple affiliated STAs, or a non-AP STA that is not an MLD.

However, roaming is not necessarily limited to moving between different AP MLDs. For example, roaming can involve changing APs within an AP MLD.

That is, a UHR AP MLD (or roaming-enabled group) must be affiliated with at least one (EHT) AP MLD, each AP MLD must be non-collocated, and the APs within each AP MLD must be collocated.

Typically, a non-AP MLD (or STA) roams from one AP MLD to another (although roaming can also change APs within a specific AP MLD).

Since the AP is being changed within an AP MLD, roaming can be considered a method of changing links while maintaining the existing multi-link setup, without completely tearing down the existing multi-link setup.

Because these processes change APs within the AP MLD, roaming can be considered a method of changing links while maintaining the multi-link setup without completely tearing down the existing multi-link setup.

This can be essentially comprised of a) the announcement process and b) frame exchange.
a) Announcement Process: Each AP in the AP MLD announces to STAs whether it can perform MLD Roaming as proposed in this specification and information related to roaming APs within the AP MLD.
b) Frame Exchange Process: This process involves exchanging frames that can trigger MLD Roaming. Upon completion of the frame exchange, MLD Roaming is completed based on the negotiated information, and operations with the O_AP are no longer performed, but rather with the N_AP.

In particular, this specification proposes the following method for MLD roaming:
- One or more STAs belonging to a non-AP MLD can establish multiple links, each with a single radio. Therefore, we propose a method where a single STA adds and deletes links. Consequently, two or more links can be connected to a single STA.
- However, since frame exchange is only performed on one link and frame exchange is not possible on the remaining links, it becomes a doze or disabled state.
- To achieve this, the non-AP MLD informs whether it supports the above-described capabilities in the Association Request frame during ML setup, i.e., when transmitting a Management frame containing the Basic Multi-link ML IE. This can be included in the MLD Capabilities and Operations subfield of the Common Info field if all STAs support it, or in the Link Info field if only some STAs support it. The information to be included is as follows:
   => Single-radio ML setup enabled: This information indicates that STAs in a non-AP MLD can each establish multiple links with one radio. This means that one STA can be connected to more than one link.

### 2.2 Announcement Process for MLD Roaming

Each AP in each MLD can announce whether roaming as proposed in this specification is possible (i.e., whether frame exchange is possible as described in b) above). The relevant information is as follows, and can include at least one of the following:
- MLD Roaming enabled: Indicator of whether roaming is enabled (e.g., 1 bit).
- UHR AP MLD ID: An ID that identifies an AP Group that enables MLD roaming. The configuration for this Group ID is as follows:

### A. ID Configuration for Roaming in AP MLD

Basically, an ID can be assigned to a UHR AP MLD that is affiliated with collocated AP MLDs. This ID is referred to as a UHR AP MLD ID in this specification. This UHR AP MLD ID can be unique within a UHR AP MLD or can be assigned a unique ID to a UHR AP MLD within the entire network. Defining a UHR AP MLD ID to distinguish a UHR AP MLD can solve scalability issues caused by a limited number of links and help identify more APs.

### A-1) Unique ID Configuration within a UHR AP MLD in a Network

This section proposes a method for ensuring that UHR AP MLD IDs are unique within a network. UHR AP MLD IDs can be assigned values such as 0, 1, 2, etc. For example, a 4-bit UHR AP MLD ID can have values from 0 to 15, while an 8-bit UHR AP MLD ID can have values from 0 to 127. This size can be modified. The following explains the meaning of each UHR AP MLD ID.
1) When the UHR AP MLD ID is 0: In this case, it can be known that the APs with this UHR AP MLD ID correspond to APs belonging to the AP MLD within the same UHR AP MLD. That is, when the non-AP MLD (or STA) recognizes this, it can recognize that the APs currently belong to the same UHR AP MLD. Therefore, roaming is possible only when the UHR AP MLD ID is 0. In addition, other APs (transmitted BSSID (TxBSSID) or nontransmitted BSSID (NonTxBSSID)) of the Multiple BSSID set to which each AP belonging to this UHR AP MLD belongs also use the same physical resource, so this UHR AP MLD ID is assigned. However, the AP MLD ID of the AP MLD to which these APs belong (transmitted BSSID (TxBSSID) or nontransmitted BSSID (NonTxBSSID)) may be different.

**Other** UHR AP MLD IDs are mapped to uniquely identify each UHR AP MLD.

### A-2) Unique ID Configuration within AP MLD

This section proposes a method for assigning unique IDs to APs capable of roaming within the entire UHR AP MLD.
- Temporary link addition/deletion: Indicates whether a link can be temporarily added or removed for an STA. This means that an STA can have two or more links for a certain period of time (e.g., indicated by 1 bit).
- Collocation enabled: Indicates whether AP MLDs are collocated (e.g., indicated by 1 bit)
   => If Collocation enabled = 1, it means that the AP and the reporting AP are physically close. Therefore, you can communicate with the existing connected AP without moving to the AP set to 1. Therefore, if a neighboring AP has Collocation enabled set to 1, you can avoid roaming. In other words, MLD Roaming Request/Response is not sent or received to an AP with Collocation enabled = 1.
- Collocation ID: An ID that distinguishes collocated AP MLDs. The configuration for this Collocation ID is as follows:

### B. Collocation ID Configuration for Roaming in UHR AP MLD

Basically, collocated AP MLDs can be assigned an ID. This is referred to as a collocation ID in this specification. This collocation ID can be unique within a group of collocated AP MLDs or can be assigned a unique ID to a collocated AP MLD within a UHR AP MLD.

### B-1. Unique Collocation ID Configuration within the Collocation Set in UHR AP MLD

This section proposes a method for ensuring that collocation IDs are unique within a collocated AP MLD group. Collocation IDs can be assigned values such as 0, 1, 2, etc. For example, a 4-bit collocation ID can have values from 0 to 15, while an 8-bit collocation ID can have values from 0 to 127. This size can be changed. The following explains the meaning of each collocation ID.

=> If Collocation ID is 0: In this case, APs with this Collocation ID can be considered as APs belonging to the same collocated AP MLD group. That is, if the MLD (or STA) recognizes this, it can recognize that the APs are currently collocated. In addition, other APs (transmitted BSSID (TxBSSID) or nontransmitted BSSID (NonTxBSSID)) of the Multiple BSSID set to which each AP belonging to this group belongs are also assigned this Collocation ID because they use the same Physical resource. However, the AP MLD ID of the AP MLD to which these APs belong (transmitted BSSID (TxBSSID) or nontransmitted BSSID (NonTxBSSID)) may be different.

Multiple AP MLDs can be included within a set of APs with the same collocation ID.

Different collocation IDs are mapped to uniquely identify each collocated AP MLD group.

### B-2) Unique Collocation ID Configuration within UHR AP MLD

This section proposes a method for assigning unique collocation IDs within a collocated AP MLD group within a UHR AP MLD. Collocation IDs can be assigned values such as 0, 1, 2, etc. For example, a 4-bit collocation ID can have values from 0 to 15, while an 8-bit collocation ID can have values from 0 to 127, and this size can be changed.

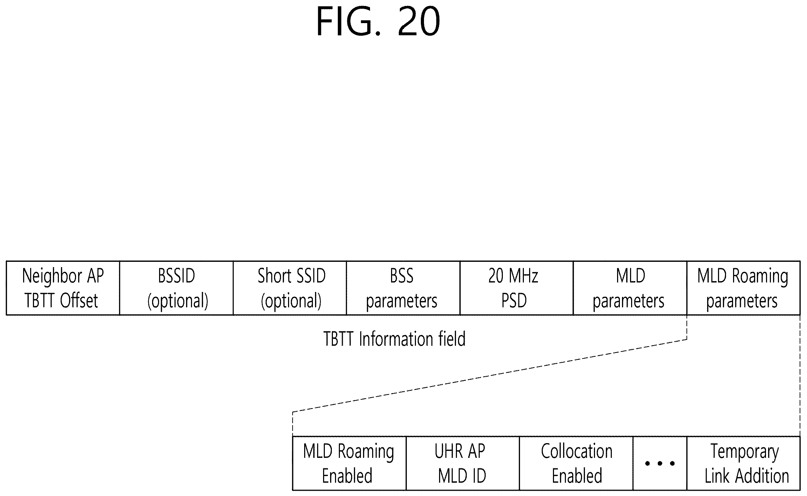

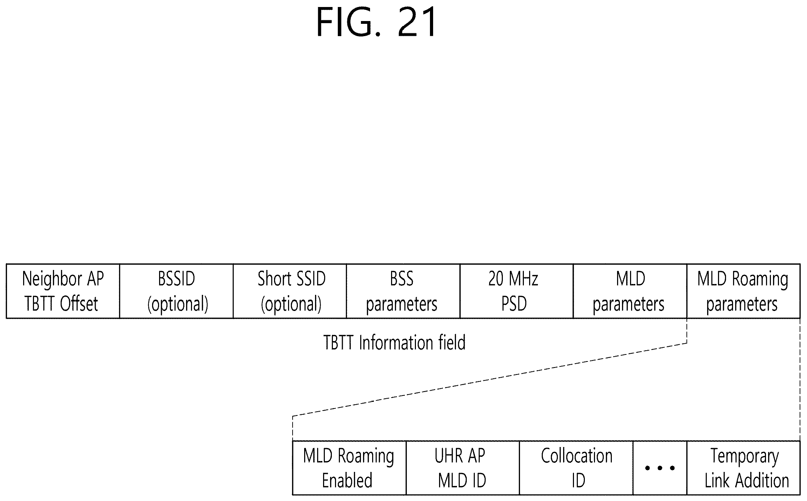

The information can be included in the Management (MGMT) frame, such as Beacon or Probe Response, and can be included in the MLD Roaming IE containing new MLD Roaming information or the existing Reduced Neighbor Report (RNR) IE (Information Element). The following is an example of when it can be included in the RNR IE. Basically, the information can be included in the TBTT Information field for each AP. The MLD Roaming parameters include at least one of the fields added in FIGS. 20 and 21 and can be included as in FIGS. 20 and 21. In addition to FIGS. 20 and 21, all fields defined in this specification include at least one.

FIG. 20 illustrates an example of an RNR IE.

Non-AP STAs send and receive MLD Roaming Request/Response only to APs with Collocation Enabled = 0 via RNR IE.

FIG. 21 illustrates another example of an RNR IE.

Non-AP STAs send and receive MLD Roaming Request/Response only to APs with Collocation ID ≠0 via RNR IE.

If the size of the existing MLD Parameters subfield is not sufficient, as shown in FIGS. 20 and 21, a new MLD Roaming Parameters subfield can be created in the RNR IE to contain information. While the existing size can be changed, this has the problem that it may cause decoding issues for 802.1 1be STAs. In this case, the MLD Roaming Parameters subfield may not include MLD Roaming Enabled because the inclusion of MLD Roaming Parameters itself may indicate that MLD Roaming is possible.

The RNR IE can reduce overhead by only sending information such as whether another AP is collocated or non-collocated with the AP currently sending a Beacon or Probe Response in the Collocation Enabled field, as shown in FIG. 20. Furthermore, it can also indicate which AP is included in which collocation set by providing the AP's Collocation ID, as shown in FIG. 21. The RNR IE can include either the Collocation Enabled field or the Collocation ID, or both.

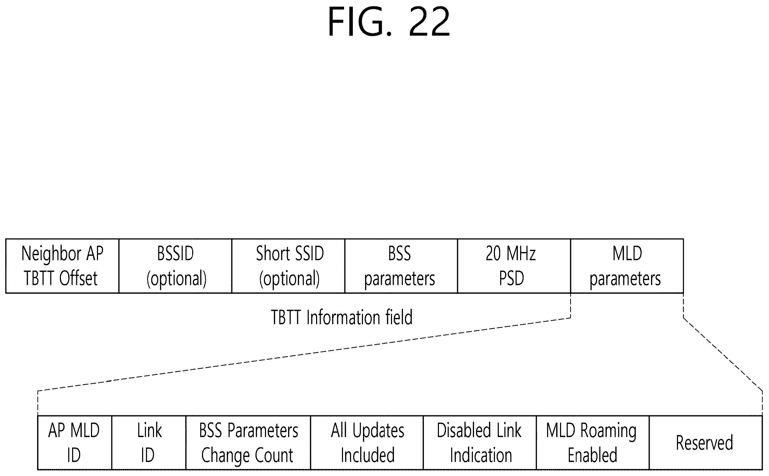

FIG. 22 shows another example for the RNR IE.

If only the MLD Roaming availability is included, as in FIG. 22, the MLD Roaming Enabled can be indicated using the existing MLD Parameters subfield. Other information can be included as separate parameters, as in FIG. 20.

### 2.3 Frame Exchange Process for MLD Roaming

Fundamentally, for MLD roaming to be triggered, frame exchange is required between the non-AP MLD (or STA) and the AP MLD. This frame can utilize the MGMT frame, specifically the Action frame, a type of MGMT frame. The frames are referred to as follows:
- The frame in which the STA requests MLD roaming from the AP is called the MLD Roaming Request frame.
- The frame in which the AP requests MLD roaming from the STA is called the MLD Roaming Response frame.

### 2.3.1 MLD Roaming Request frame format

The MLD Roaming Request frame format can be structured in the following order:

**[Table 1]**

| Order | Information |
|---|---|
| 1 | Category |
| 2 | UHR Action or Protected UHR Action |
| 3 | Dialog Token |
| 4 | Reconfiguration Multi-Link element |

Order 1: Basically, a Category can be included in a new UHR Action or a Protected UHR Action, but is not limited to these.

Order 4: The Reconfiguration Multi-link IE defined in the existing 802.11be standard can be used to provide the information required for an MLD Roaming request.
- The modified Reconfiguration Multi-link IE is as follows:

### 1) Common Info field

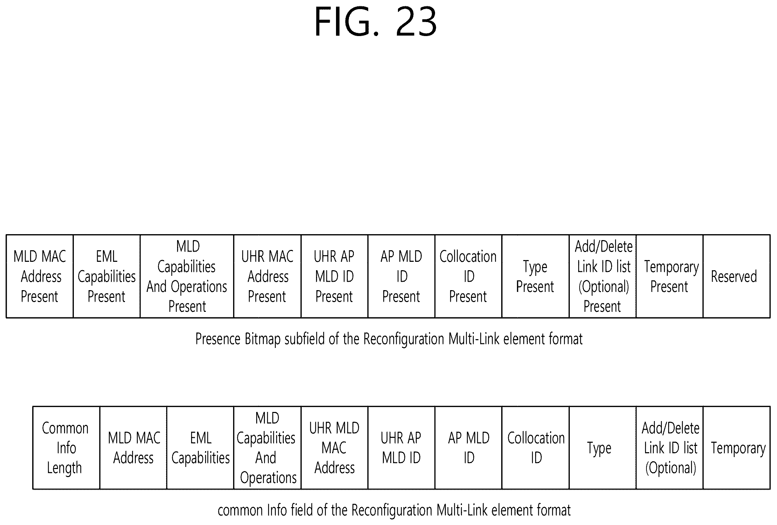

FIG. 23 illustrates an example of the Common Info field of the Reconfiguration Multi-link IE proposed in this embodiment.

When moving to a new AP, if one or more STAs, particularly non-AP MLD-based STAs, simultaneously perform MLD roaming, MLD capabilities and operations or EML Capabilities may change. Therefore, additional information about this may be included in the Common Info field. As before, the presence of subfields in the Common Info field is determined by the Presence Bitmap.

### 2) Link Info field

As mentioned in 1), if more than one STA simultaneously performs MLD roaming, one or more Per-STA Profile subelements may be required.

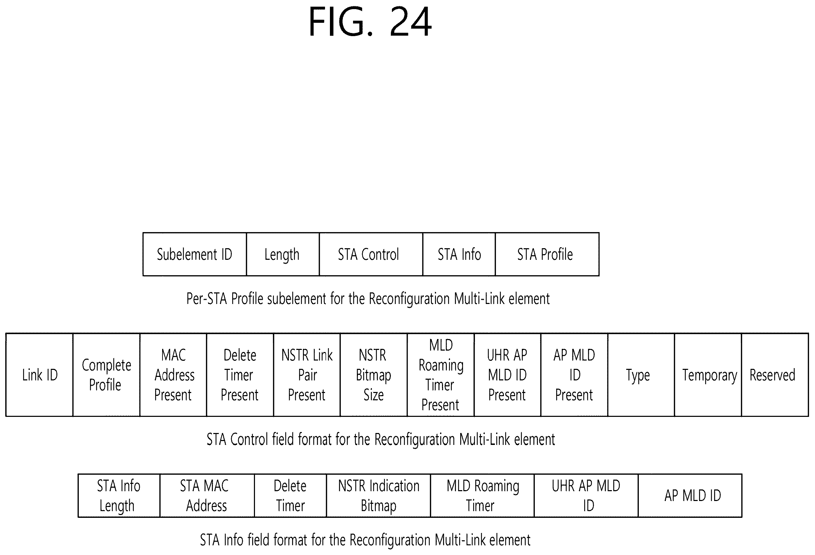

FIG. 24 illustrates an example of the Link Info field of the Reconfiguration Multi-link IE proposed in this embodiment.
- Basically, when transitioning to a different AP, the information on whether each link is STR (Simultaneous transmission and receive) or NSTR (non-STR) may change from the Non-AP MLD perspective, so the NSTR indication bitmap may be included in the STAInfo field. Similarly, as before, the presence or absence of STA Info subfields can be determined by the Present subfields of STA Control.
- Here, the Link ID is indicated as the Link ID corresponding to N_AP.
- The Complete Profile refers to the STA's Complete information, i.e., all information included when transmitting an Association Request frame, as before. However, since this is a case where an existing STA, not a new STA, is moving, the capabilities or operational parameters of the STA may not change. Since the AP MLD already knows this, it can be used as an instruction that only includes changed information instead of the Complete Profile.
   => For example, if the Complete Profile = 0, which is a Partial Profile as before, the STA Profile only includes information that will change (i.e., fields/IEs) when moving to N_AP. Alternatively, the Complete Profile is referred to as the Changed Profile. If this value is 1, the STA Profile only includes information that will change (i.e., fields/IEs) when moving to N_AP.
- The MLD Roaming Timer indicates the time when MLD Roaming is completed, no longer operating with the O_AP, and operating with the N_AP. In other words, it can refer to the remaining time until the expected time to switch to the AP to which to roam. This is related to the TIM field described later in 2.4.
   => If the MLD Roaming Timer is applied commonly to all APs, it can be included in the Common Info field, unlike in FIG. 24. In this case, the presence or absence of the MLD Roaming Timer in the Common Info field can be indicated through the Presence Bitmap.

Since this is information transmitted by the STA, it can be interpreted as a Reference to the AP MLD.
- The UHR AP MLD ID, AP MLD ID and Collocation ID can be additionally included in the information described above based on FIGS. 23 and 24 as follows. The AP MLD ID is the ID of the AP MLD to which the APs to which the non-AP MLD (or STA) will roam belong, and the UHR AP MLD ID is the ID of the UHR AP MLD to which the AP MLDs to which the non-AP MLD (or STA) will roam belong. In a situation where the AP MLD checks the UHR AP MLD ID in advance through a beacon or probe request/response process and sends a roaming request only to the same UHR AP MLD, the UHR AP MLD ID field may not exist in the Reconfiguration Multi-link element. Cases like this are described in 1-2) case 2 when included in the Common Info field, 2-2) case 2 when included in the Link Info field - always present, and 3-2) case 2 when included in the Link Info field - not always present.

That is, it describes the format depending on whether the UHR AP MLD ID, AP MLD ID and Collocation ID are always included in the Reconfiguration Multi-link IE.

### 1-1) Case 1: Included in the Common Info field

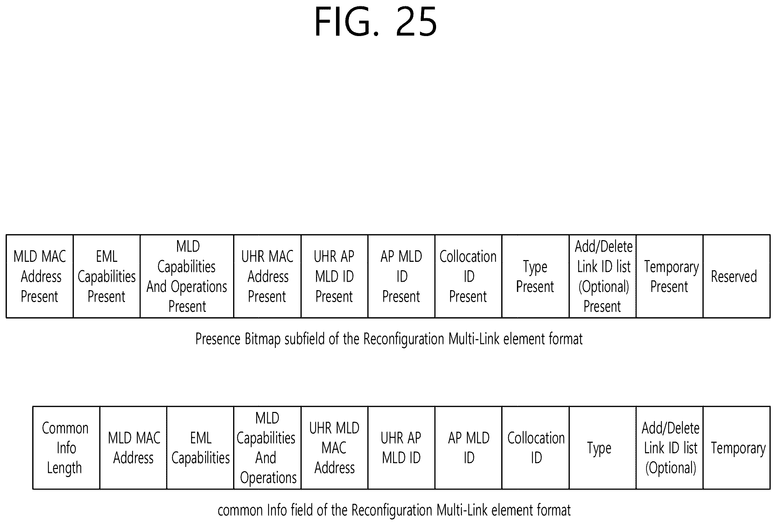

FIG. 25 illustrates an example of including a UHR AP MLD ID and an AP MLD ID in the Common Info field of the Reconfiguration Multi-link IE proposed in this embodiment.

This can indicate whether to include UHR AP MLD ID, AP MLD ID, and Collocation ID through the Presence Bitmap. If it is included only in the Common Info field, roaming can only be requested to APs with the same UHR AP MLD ID, AP MLD ID, and Collocation ID. In other words, requests cannot be made for multiple AP MLD IDs or multiple Collocation IDs even within the same UHR AP MLD. For example, one or more STAs cannot request reconfiguration to an AP belonging to an AP MLD different from the AP of the same AP MLD. However, if roaming to the same AP MLD is common, overhead can be reduced compared to including it in each Link Info field below.

### 1-2) Case 2 when included in the Common Info field

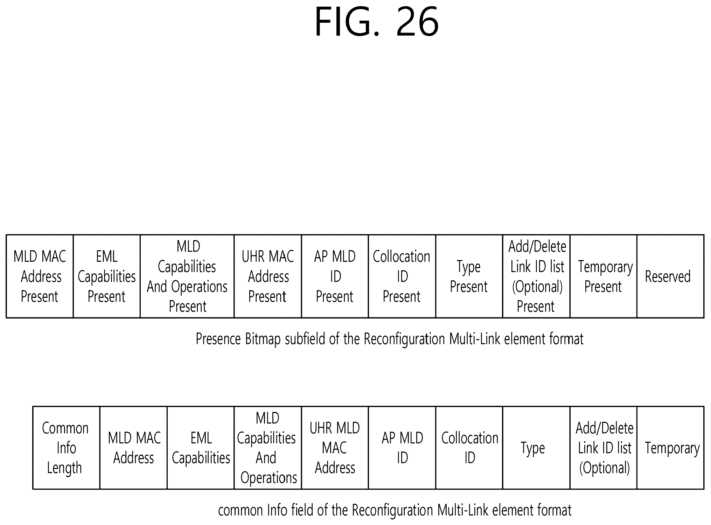

FIG. 26 illustrates an example of including an AP MLD ID in the Common Info field of the Reconfiguration Multi-link IE proposed in this embodiment.

If the STA and AP confirm and recognize that the UHR AP MLDs affiliated with N_AP and O_AP are the same through the previous association process, there is no need to transmit the UHR AP MLD ID, so overhead can be reduced without adding a separate UHR AP MLD ID field, as shown in FIG. 26.

### 2-1) Included in the Link Info field - Case 1, always present

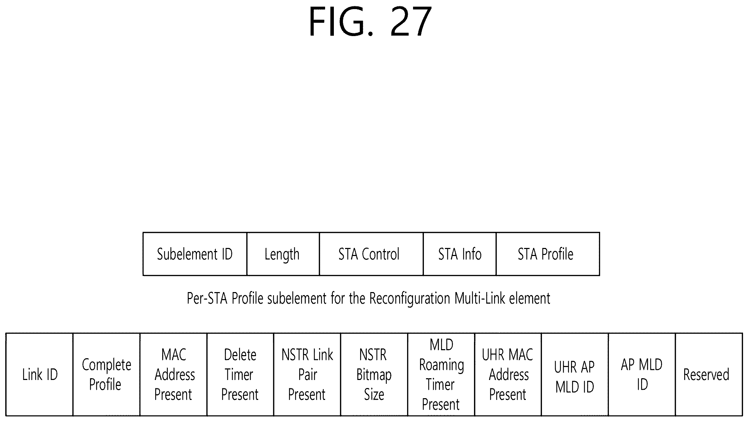

FIG. 27 illustrates an example of including a UHR AP MLD ID and an AP MLD ID in the Link Info field of the Reconfiguration Multi-link IE proposed in this embodiment.

The Link Info field can contain multiple Per-STA Profile subelements, each of which can indicate a roaming request for a single AP via a Link ID. The AP MLD ID and UHR AP MLD ID in the STA Control field of the Per-STA Profile subelement can be used to identify the AP to which the STA wishes to roam. This allows roaming requests for multiple APs corresponding to different AP MLD IDs, but if the request is for the same AP MLD ID, the overhead is greater than indicating it in the Common Info field.

### 2-2) Cases Included in the Link Info field - Always Present Case 2

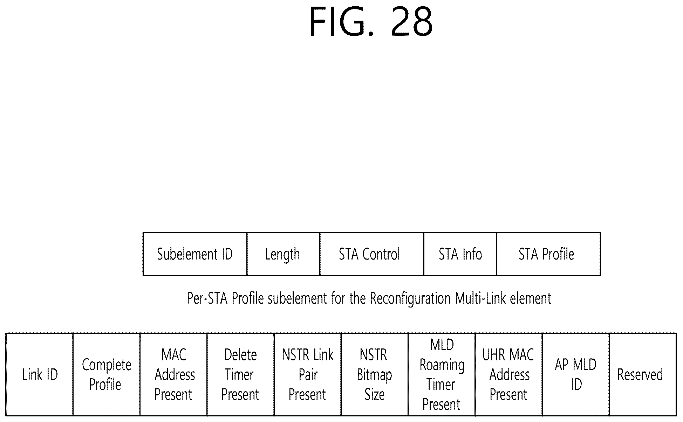

FIG. 28 illustrates an example of including an AP MLD ID in the Link Info field of the Reconfiguration Multi-link IE proposed in this embodiment.

If the STA and AP have confirmed and recognized through the previous association process that the UHR AP MLDs of N_AP and O_AP are affiliated with the same, there is no need to transmit the UHR AP MLD ID, so overhead can be reduced without adding a separate UHR AP MLD ID field, as shown in FIG. 28.

### 3-1) Included in the Link Info field - Case 1, when not always present

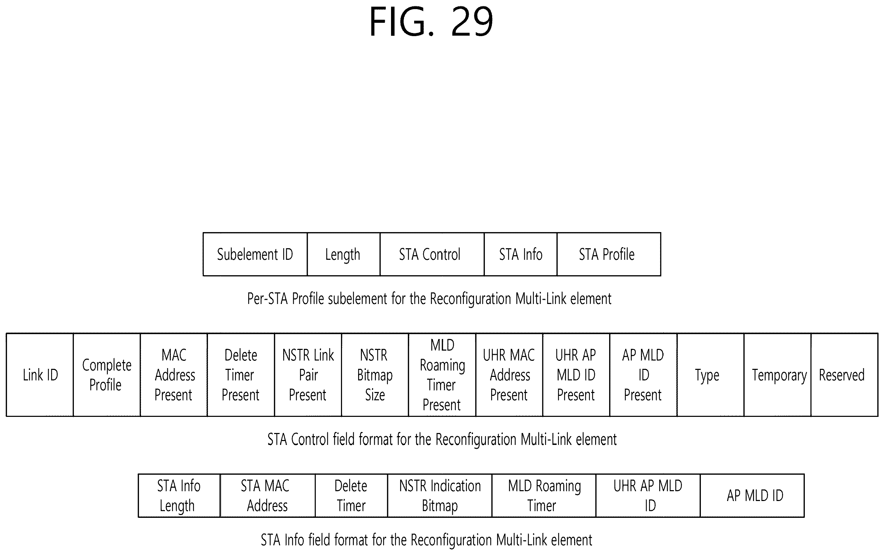

FIG. 29 illustrates another example of including a UHR AP MLD ID and an AP MLD ID in the Link Info field of the Reconfiguration Multi-link IE proposed in this embodiment.

The inclusion of the AP MLD ID corresponding to the AP corresponding to the Link ID can be indicated through the UHR AP MLD ID Present and AP MLD ID Present of the STA Control field of the Per-STA Profile subelement. The UHR AP MLD ID and AP MLD ID can be included in the STA Info field or the STA Profile field. Similarly, this can request information about multiple APs corresponding to multiple AP MLD IDs. In particular, if combined with the indication method in the Common Info field of method 1), overhead can be reduced compared to method 2) by not including the AP MLD ID when requesting roaming for APs corresponding to the same AP MLD ID.

Meanwhile, if the UHR AP MLD ID and AP MLD ID are indicated in Common Info in another way, it may not include the UHR AP MLD ID and AP MLD ID because it implicitly recognizes that this is a roaming request for APs corresponding to the same AP MLD ID. In other words, the UHR AP MLD ID Present field and AP MLD ID Present field may not be included.

### 3-2) In case of inclusion in the Link Info field - Case 2 when not always present

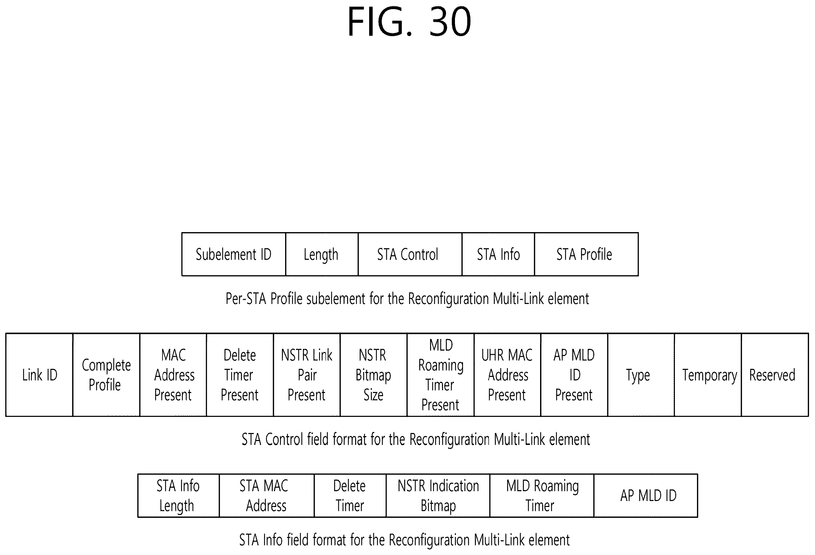

FIG. 30 illustrates another example of including an AP MLD ID in the Link Info field of the Reconfiguration Multi-link IE proposed in this embodiment.

If the STA and AP confirm and recognize that the UHR AP MLDs associated with N_AP and O_AP are the same through the previous association process, there is no need to transmit the UHR AP MLD ID. This reduces overhead by eliminating the need to add a separate UHR AP MLD ID field, as shown in FIG. 29.

Furthermore, since this specification includes functions for temporarily adding and deleting links for MLD roaming, a method for indicating this is required. The following methods can be used.

Basically, using 2 bits or more, Type can be Type 0: Add / Type 1: Delete / Type 2: Temporary Add / Type 3: Temporary Delete. Temporary Delete can also be replaced with Type 1. Add means that an STA in a non-AP MLD requests an additional link connection with an AP in an AP MLD. Delete means disconnecting (removing) the currently connected link. Temporary Add means that an STA in a non-AP MLD requests an additional connection with an AP other than the currently connected AP, allowing it to configure multiple links.

=> The Temporary field in the Type field above can also be configured as a separate field. For example, it can be configured with the Temporary 1 bit and the Type field excluding Temporary add/delete, and Temporary Add can be configured using the values of the two fields (e.g., Temporary = 1, Type = Add).

The Type field and the Temporary field may be included as follows, and at least one or more fields are included:

### 1) When included in the Common Info field of the MLD Roaming Request frame body or Reconfiguration IE

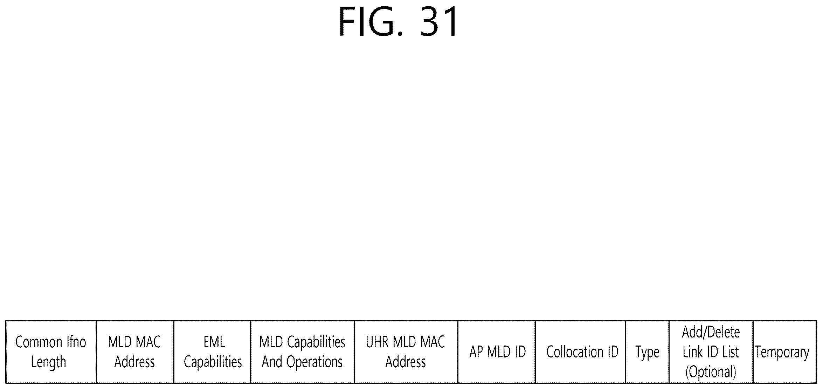

FIG. 31 illustrates an example of including a Temporary field in the Common Info field of the Reconfiguration Multi-link IE proposed in this embodiment.

In this case, only one operation can be performed for all APs. That is, in the case of Add, only a link addition request can be made for the APs indicated in the Link Info. FIG. 31 is an example of what is included in Common Info.

### 2-1) When included in the MLD Roaming Request frame body or the Link Info field of Reconfiguration IE

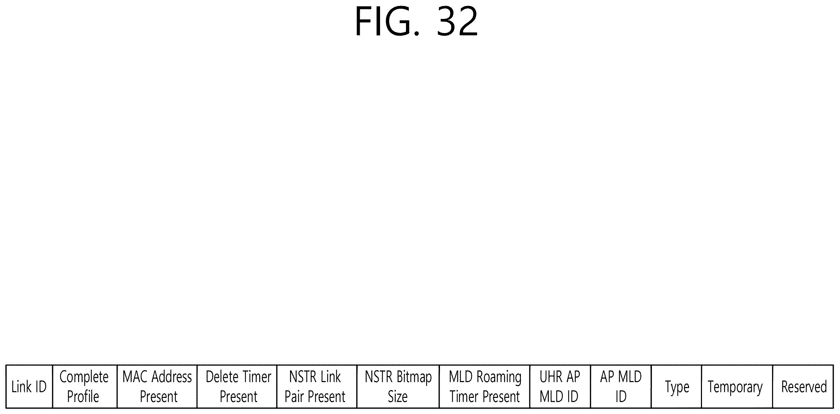

FIG. 32 illustrates an example of including a Temporary field in the Link Info field of the Reconfiguration Multi-link IE proposed in this embodiment.

In this case, different operations can be requested for each AP. For example, a temporary add can be requested for one AP, and a delete can be requested for another. FIG. 32 shows an example of what is included in Link Info.

### 2-2) When included in the MLD Roaming Request frame body or the Link Info field of Reconfiguration IE

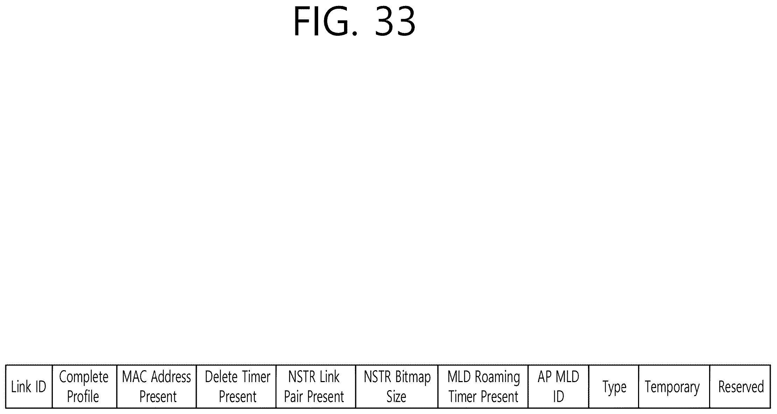

FIG. 33 illustrates another example of including a Temporary field in the Link Info field of the Reconfiguration Multi-link IE proposed in this embodiment.

FIG. 33 is an example in which the Type field is included in Link Info in the case of Link Info in which the UHR AP MLD ID field is omitted.

### 2.3.2 MLD Roaming Response frame format

Since the MLD Roaming Response frame must change links while maintaining multi-link setup, it is necessary to consider the link-level parameters that must be provided.

**[Table 2]**

| Order | Information |
|---|---|
| 1 | Category |
| 2 | UHR Action or Protected UHR Action |
| 3 | Dialog Token |
| 4 | Status Code |
| 5 | Basic Multi-Link element |
| 6 | Group key Information |
| 7 | AID |
| 8 | Channel Switching Announcement element (optional) |
| 9 | Extended Channel Switching Announcement element (optional) |
| 10 | TID-to-link Mapping element (optional) |

Order 1: Basically, the Category can be included in a new UHR Action or Protected UHR Action, but is not limited thereto.

Order 4: The Status Code can utilize the existing Status Code field.
- When responding to an MLD Roaming request, the Basic Multi-link IE defined in the existing 802.11be can be utilized to provide the necessary information about the AP MLD and N_AP.

Order 5: The modified Basic Multi-link IE is as follows:

### 1) Common Info field

- The existing Common Info field can be utilized. This Common Info information corresponds to the N_APs for which one or more STAs are performing MLD Roaming.

### 2) Link Info field

As mentioned in 1), if more than one STA performs MLD roaming simultaneously, one or more Per-STA Profile subelements may be required for the corresponding APs.

The following changes are made to the STA Control field, STA Info field, and STA Profile field of the existing Basic Multi-link IE:
- By default, the Link ID in the STA Info field is indicated by the Link ID corresponding to N_AP.
- The Complete Profile, as before, represents the AP's Complete information, i.e., all information included when transmitting an Association Response frame. However, since the AP is performing MLD roaming with an STA, its Capability or operational parameters may not change. Therefore, in this case, the Complete Profile is set to 0.
- Additionally, it includes information about the MLD Roaming Timer. For this, the STA Control field includes the MLD Roaming Timer Present field and the STA Info field includes the MLD Roaming Timer field. This means the time when MLD roaming is completed and no longer operates with the O_AP, but operates with the N_AP. This can utilize the MLD Roaming Timer information transmitted by the STA, and may not be included if the STA transmitted it and the Response's Status Code is SUCCESS.
- The UHR AP MLD ID and AP MLD ID can be additionally included in the above information as follows. The AP MLD ID is the ID of the AP MLD to which the non-AP MLD (or STA) will roam, and the UHR AP MLD ID is the ID of the UHR AP MLD to which the non-AP MLD (or STA) will roam. If the MLD Roaming Request frame does not contain the UHR AP MLD ID, it can be known that it is affiliated with the same UHR AP MLD, so the UHR AP MLD ID field may not be included. This case is described in 1-2) case 2 when included in the Common Info field, 2-2) case 2 when included in the Link Info field - always present, and 3-2) case 2 when included in the Link Info field - not always present.

### 1-1) Case 1, if included in the Common Info field

This can be utilized when requested using the method 1-1) Case 1, if included in the Common Info field, in the Reconfiguration ML IE described above.

Similarly, the presence bitmap indicates whether the UHR AP MLD ID and AP MLD ID are included, and accordingly, the UHR AP MLD ID and AP MLD ID are included in the Common Info field. This can only provide information on APs whose AP MLD has UHR AP MLD ID = 0 and Collocation ID≠0.

### 1-2) Case 2, if included in the Common Info field

This can be utilized when requesting the Reconfiguration ML IE described above using the 1-2) Case 2 method.

Similarly, the presence bitmap indicates whether the AP MLD ID is included, and accordingly, the AP MLD ID is included in the Common Info field.

### 2-1) Included in the Link Info field - Case 1, always present

This can be utilized when requesting the Reconfiguration ML IE described above using the 2-1) Included in the Link Info field - Case 1, always present method.

The UHR AP MLD ID and AP MLD ID corresponding to the AP corresponding to the Link ID of each Per-STA Profile subelement are included in the STA Control field. This can provide information about multiple APs corresponding to multiple AP MLD IDs, but providing information for the same AP MLD ID incurs greater overhead than specifying it in the Common Info field.

### 2-2) Included in the Link Info field - Case 2, always present

This can be utilized when requesting the Reconfiguration ML IE described above using the 2-2) Included in the Link Info field - Case 2, always present method.

The AP MLD ID corresponding to the AP corresponding to the Link ID of each Per-STA Profile subelement is included in the STA Control field. This can provide information for multiple APs corresponding to multiple AP MLD IDs, but providing information for the same AP MLD ID incurs greater overhead than specifying it in the Common Info field.

### 3-1) Included in the Link Info field - Case 1 (Not Always Present)

This can be utilized when requesting the Reconfiguration ML IE described above using the method 3-1) Included in the Link Info field - Case 1 (Not Always Present).

The UHR AP MLD ID Present and AP MLD ID Present fields in the STA Control field of the Per-STA Profile subelement indicate whether the AP MLD ID corresponding to the Link ID is included. The UHR AP MLD ID and AP MLD ID can be included in the STA Info field or the STA Profile field. Similarly, this can provide information about multiple APs corresponding to multiple AP MLD IDs. In particular, when combined with the indication method in the Common Info field of method 1), if only information about APs corresponding to the same AP MLD ID is provided, overhead can be reduced compared to method 2) by omitting the UHR AP MLD ID and AP MLD ID.
=> Meanwhile, in the case of Unique ID Configuration within the Collocation Set in AP MLD described above, if the Collocation ID is 0, the UHR AP MLD ID, AP MLD ID, and Collocation ID may be omitted. That is, if the Collocation ID does not exist, the AP that received the request can implicitly recognize that it is a request for information from other APs regarding the AP MLD to which it belongs.
=> On the other hand, if the Collocation ID is indicated in Common Info in another way, it may not include the UHR AP MLD ID, AP MLD ID, and Collocation ID because it is implicitly recognized that this is information about APs corresponding to the same Collocation Set. In other words, the UHR AP MLD ID Present and AP MLD ID Present fields may not be included.

### 3-2) Included in the Link Info field - Case 2, if not always present

This can be utilized when requesting the Reconfiguration ML IE described above using the method described in 3-2) Included in the Link Info field - Case 2, if not always present.

The AP MLD ID Present field of the Per-STA Profile subelement indicates whether the AP MLD ID corresponding to the AP corresponding to the Link ID is included. The AP MLD ID can be included in either the STA Info field or the STA Profile field. Similarly, this can provide information about multiple APs corresponding to multiple AP MLD IDs. In particular, when combined with the indication method in the Common Info field of method 1), if only information about APs corresponding to the same AP MLD ID is provided, overhead can be reduced compared to method 2) by not including the AP MLD ID.
=> Meanwhile, in the case of Unique ID Configuration within the Collocation Set in AP MLD described above, if the Collocation ID is 0, the AP MLD ID and Collocation ID may be omitted. That is, if the Collocation ID does not exist, the AP that received the request can implicitly recognize that it is a request for information from other APs regarding the AP MLD to which it belongs.
=> On the other hand, if the Collocation ID is indicated in Common Info in another way, it may not include the AP MLD ID and Collocation ID because it is implicitly recognized that this is information about APs corresponding to the same Collocation Set. In other words, the UHR AP MLD ID Present and AP MLD ID Present fields may not be included.

### Order 6: Group Key Information

Since the group key is unique for each link, it is necessary to provide group key information for N_APs.

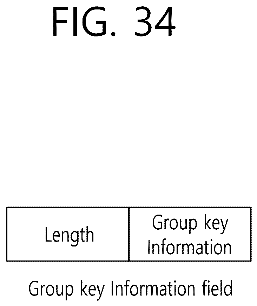

FIG. 34 illustrates an example of the Group Key Information field.

Referring to FIG. 34, Length indicates the length of the Group Key Information. The Group Key Information for each N_AP includes the MLO GTK KDE format, MLO IGTK KDE, and MLO BIGTK KDE, which each contain the Link ID of the N_AP defined in 802.1 1be.

Order 7: Since the overall AID (Association Identifier) space is limited, each AP MLD can manage the AID. That is, an AID can be assigned when roaming to another AP MLD. However, in the following cases, the AID may not be included.
- When roaming to a different AP MLD and assigning the same AID
- When the UHR AP MLD manages the entire AID space as before

Orders 8 and 9: In this case, the channel of each AP to be roamed to is the same, but different from the channels of the previously connected APs. However, the following cases may be included differently for Orders 8 and 9:
- If all APs enabling MLD roaming are assumed to always be on the same channel, these IEs are not included.
- The channel of an AP to be roamed to may be the same or different from the channel of the previously connected AP. In this case, the Channel Switching Announcement IE or Extended Channel Switching Announcement IE can be included in the Link Info of the Basic Multi-link IE in Order 5. This is to perform a channel switch for each AP to be roamed to.

Order 10: This can be used to map TIDs in advance for newly connected links through TID-to-link mapping. If separate TID-to-link mapping is not performed, the default mapping can be applied.

Additionally, an MLD Roaming Timer can be added to both the MLD Roaming Request/Response frames.

Additionally, the AP MLD can include the MLD Roaming Timer in the Reconfiguration ML IE above. Similarly, since the AP MLD can control current roaming, it can indicate a specific MLD Roaming Timer. For example, if the STA does not include an MLD Roaming Timer or it is inappropriate, the AP MLD can set and notify the STA. Furthermore, if the STA does not transmit an MLD Roaming Timer, the AP MLD can set and notify the STA. The MLD Roaming Timer has the same meaning: it indicates the time when MLD roaming is complete, no longer operating with the O_AP, and operating with the N_AP.
=> When a Temporary Add request is received, after the MLD Roaming Timer expires, the STA completely disconnects from the O_AP (i.e., Temporary Delete or Delete) and allows it to connect to the N_AP.
=> If the MLD Roaming Timer is applied commonly to all APs, it can be included in the Common Info field. In this case, the presence or absence of the Common Info field can be indicated through the Presence Bitmap.

- Additionally, the MLD Roaming Response frame can include information about the MLD Roaming Timer. To this end, the STA Control field includes an MLD Roaming Timer Present field, and the STA Info field includes an MLD Roaming Timer field. This can indicate the remaining time until the STA can receive data from the AP to which it is roaming. This can also utilize the MLD Roaming Timer information transmitted by the STA. This is fundamentally related to the TIM field presented in 2.4.

=> If the MLD Roaming timer is applied commonly to all APs, it can be included in the Common Info field. The presence of the Common Info field can be indicated through the Presence Bitmap. Alternatively, it can be included in the MLD Roaming Probe Response frame body.

### 2.4 MLD Roaming Example

The AP and STA operations for MLD Roaming are as follows:

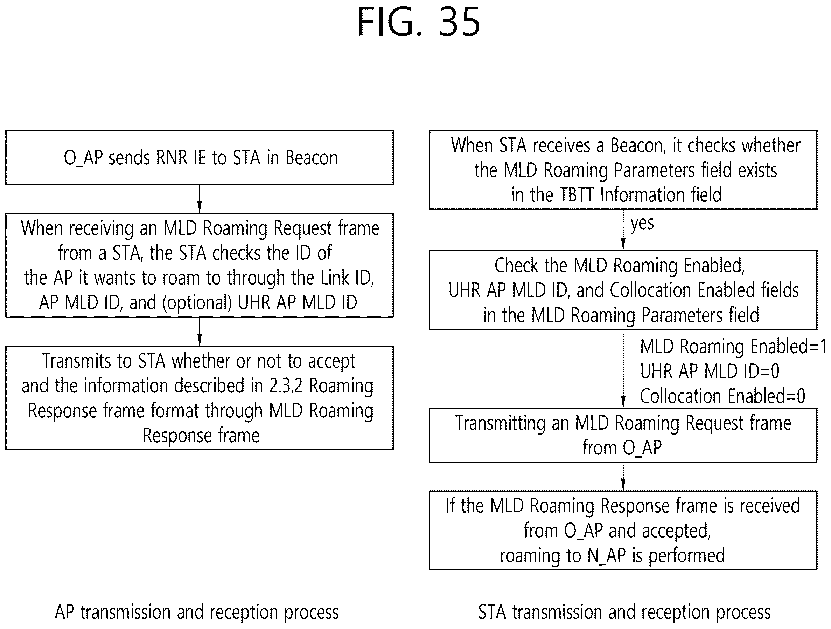

FIG. 35 illustrates a procedure for determining whether an N_AP is capable of roaming using the Collocation Enabled field.

Referring to FIG. 35, the AP's transmission and reception process is as follows.

The O_AP transmits the RNR IE to the STA in the Beacon. Upon receiving the MLD Roaming Request frame from the STA, the O_AP verifies the Link ID, AP MLD ID, and UHR AP MLD ID (optional) of the AP to which the STA wishes to roam. The O_AP then transmits to the STA whether it accepts the request and the information described in the Roaming Response frame format via the MLD Roaming Response frame.

Referring to FIG. 35, the STA's transmission and reception process is as follows.

When the STA receives a beacon, it checks whether the MLD Roaming Parameters field exists in the TBTT Information field. The STA checks the MLD Roaming Enabled, UHR AP MLD ID, and Collocation Enabled fields within the MLD Roaming Parameters field. At this time, MLD Roaming Enabled is set to 1, UHR AP MLD ID is set to 0, and Collocation Enabled is set to 0. The STA transmits an MLD Roaming Request frame to the O_AP. The STA receives an MLD Roaming Response frame from the O_AP, and if accepted, roams to the N_AP.

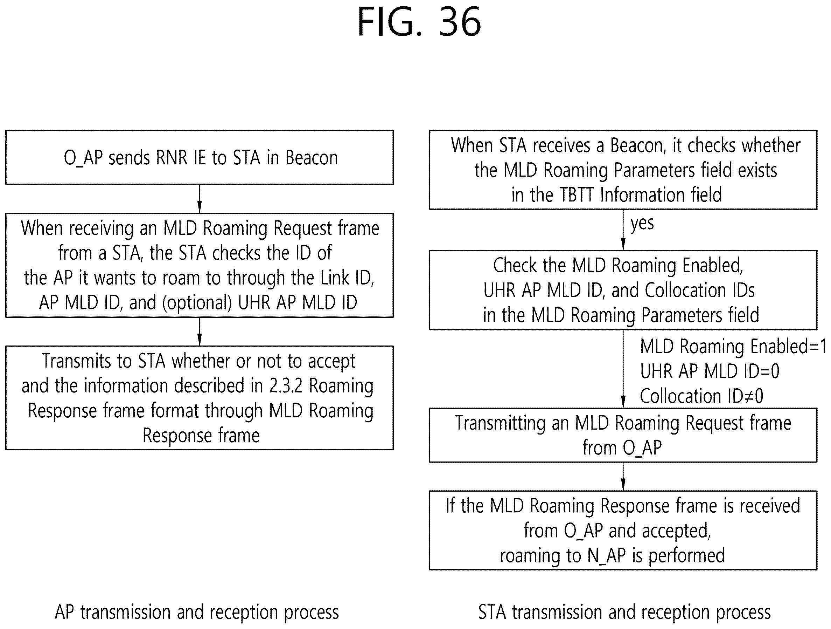

FIG. 36 illustrates a procedure for determining whether an N_AP is capable of roaming using the Collocation ID.

Referring to FIG. 36, the AP's transmission and reception process is as follows.

The O_AP transmits the RNR IE to the STA in the Beacon. Upon receiving the MLD Roaming Request frame from the STA, the O_AP verifies the Link ID, AP MLD ID, and UHR AP MLD ID (optional) of the AP to which the STA wishes to roam. The O_AP then transmits to the STA whether it accepts the request and the information described in the Roaming Response frame format via the MLD Roaming Response frame.

Referring to FIG. 36, the STA's transmission and reception process is as follows.

When the STA receives a beacon, it checks whether the MLD Roaming Parameters field exists in the TBTT Information field. The STA checks the MLD Roaming Enabled, UHR AP MLD ID, and Collocation IDs in the MLD Roaming Parameters field. At this time, MLD Roaming Enabled is set to 1, UHR AP MLD ID is set to 0, and Collocation ID is ≠0. The STA transmits an MLD Roaming Request frame to the O_AP. The STA receives an MLD Roaming Response frame from the O_AP, and if accepted, roams to the N_AP.

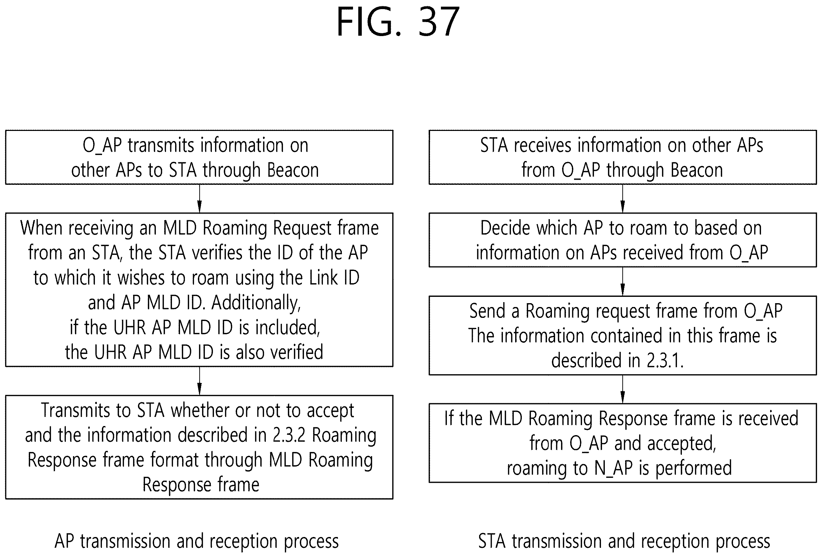

FIG. 37 illustrates an MLD Roaming procedure when a UHR AP MLD ID is included in the Reconfiguration element.

Referring to FIG. 37, the AP's transmission and reception process is as follows.

The O_AP transmits information about other APs to the STA via a beacon. Upon receiving an MLD Roaming Request frame from the STA, the STA verifies the ID of the AP to which it wishes to roam using the Link ID and AP MLID. Additionally, if the MLD Roaming Request frame includes a UHR AP MLD ID, the STA also verifies the UHR AP MLD ID. The O_AP transmits to the STA whether it accepts the request and the information described in Section 2.3.2. Roaming Response frame format via the MLD Roaming Response frame.

Referring to FIG. 37, the STA's transmission and reception process is as follows.

The STA receives information about other APs via the Beacon from the O_AP. Based on the information about the APs received from the O_AP, the STA determines the AP to which it will roam. The STA transmits a Roaming Request frame to the O_AP. The STA receives an MLD Roaming Response frame from the O_AP, and if accepted, roams to the N_AP.

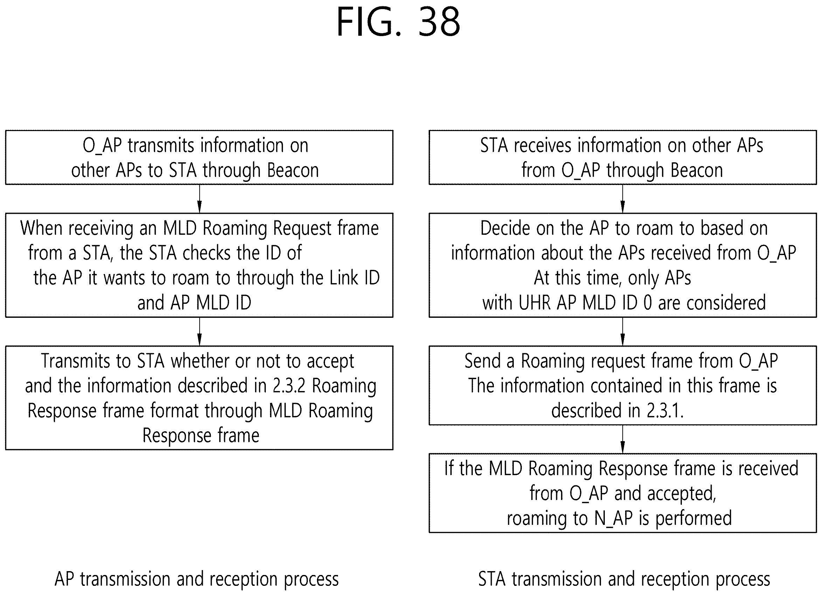

FIG. 38 illustrates an MLD Roaming procedure when a UHR AP MLD ID is not included in the Reconfiguration element.

Referring to FIG. 38, the AP's transmission and reception process is as follows.

O_AP transmits information about other APs to the STA via Beacon. Upon receiving an MLD Roaming Request frame from the STA, the STA verifies the ID of the AP to which it wishes to roam using the Link ID and AP MLID. O_AP then transmits the MLD Roaming Response frame to the STA, indicating whether it accepts the request and including the information described in Section 2.3.2. Roaming Response Frame Format.

Referring to FIG. 38, the STA's transmission and reception process is as follows.

The STA receives information about other APs via the Beacon from the O_AP. The STA determines the AP to which it will roam based on the information about the APs received from the O_AP. The STA transmits a Roaming Request frame to the O_AP. The STA receives an MLD Roaming Response frame from the O_AP, and if accepted, roams to the N_AP.

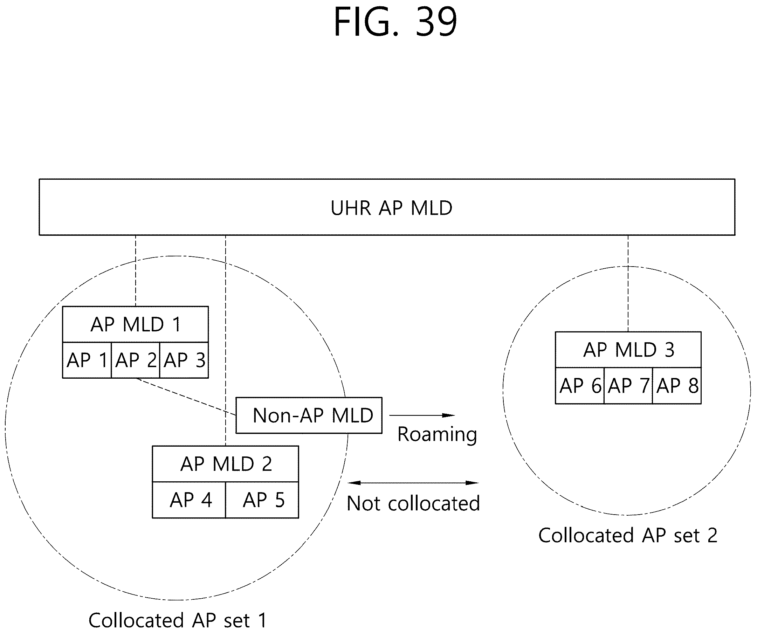

FIG. 39 illustrates an example of a collocated AP set.

FIG. 39 shows an example of determining whether to roam based on collocation information when a non-AP MLD moves while already connected to AP 2. Collocation information can be obtained through the Collocation Enabled field or Collocation ID field of the RNR IE. Although AP 4 and AP 5, which are affiliated with AP MLD 2, exist around the non-AP MLD, they are included in the same collocated AP set as the currently connected AP 2, so the non-AP MLD does not send a roaming request to AP 4 and AP 5. On the other hand, the non-AP MLD can send a roaming request to AP 6, AP 7, and AP 8, which are included in a different collocated AP set from AP 2. By defining a collocated AP set in this way, unnecessary roaming can be prevented by informing the non-AP MLD of information about APs that are physically close and do not need to roam.

### 1) Example #1 - When only some STAs roam to the AP first.

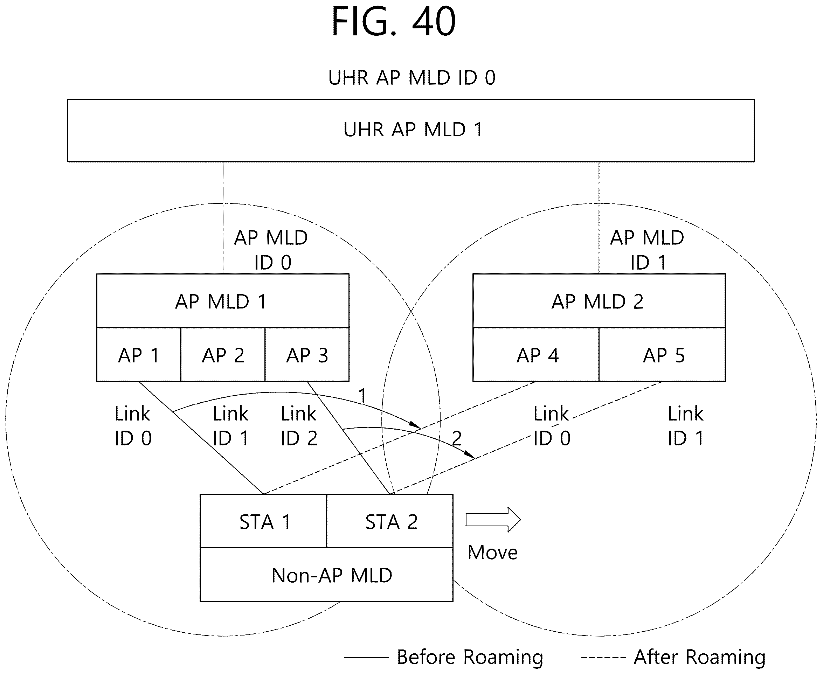

FIG. 40 illustrates Example 1 of the MLD Roaming procedure.

FIG. 40 illustrates a case where only some STAs roam to APs first, rather than all STAs simultaneously moving to APs in a different AP MLD. For example, STA 1 roams from AP 1 to AP 3 first, and then STA 2 roams from AP 3 to AP 5. In this example, there are two STAs in the non-AP MLD, but even if there are three STAs, only two STAs can roam first, and the remaining STAs can roam later.

In this example, STA 1 and AP 1, as presented above, can first exchange MLD Roaming Request/Response messages. STA 1 will indicate the (optional) UHR AP MLD ID, AP MLD ID, and Link ID for AP 4 in the MLD Roaming Request. AP 1 will then accept the request and include information about AP 4 in the Basic Multi-link IE. Next, STA 2 and AP 3 will perform the same process for AP 5. Alternatively, STA 1 can perform this process for AP 4, to which it is connected, instead of STA 2.

This example can be effective for data reception. While AP 1 and STA 1 are roaming, AP 2 and STA 3 can exchange data. Similarly, while AP 3 and STA 2 are roaming, AP 4 and STA 1 can exchange data. At this time, all TIDs need to be mapped to the links exchanging data. However, this example is difficult to apply to non-MLD STAs or when there is only one STA in the MLD, and relatively high frame exchange overhead may occur.

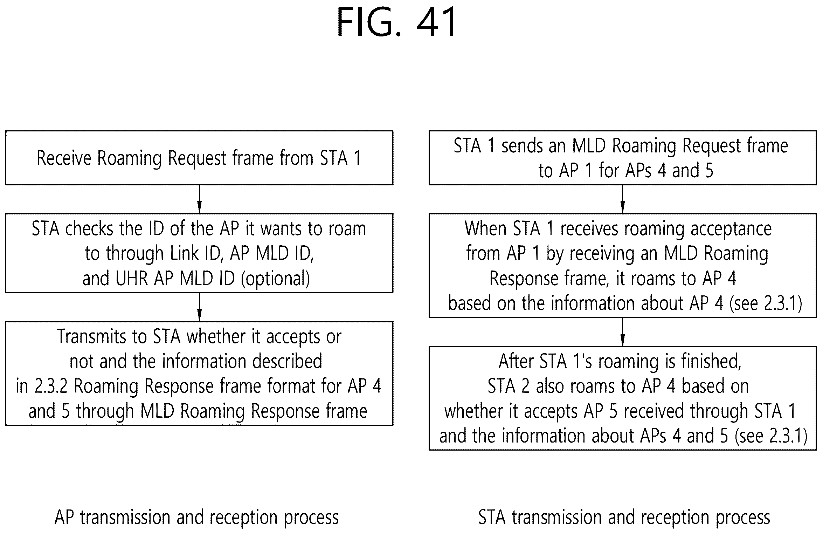

FIG. 41 illustrates the operation process of Example 1 of the MLD Roaming procedure.

Referring to FIG. 41, the AP transmission and reception process is as follows.

AP 1 receives a Roaming Request frame from STA 1. The STA determines the ID of the AP to which it wishes to roam using the Link ID, AP MLD ID, and UHR AP MLD ID (optional). AP 1 transmits to STA 1 an MLD Roaming Response frame, indicating whether it accepts the frame and including information about APs 4 and 5 described in Section 2.3.2. Roaming Response Frame Format.

Referring to FIG. 41, the STA transmission and reception process is as follows.

STA 1 transmits to AP 1 an MLD Roaming Request frame for APs 4 and 5. If STA 1 receives roaming acceptance from AP 1 through the MLD Roaming Response frame, it roams to AP 4 based on the received information about AP 4. After STA 1's roaming is finished, STA2 also roams to AP 4 based on whether it accepts AP 5 received through STA 1 and the information about APs 4 and 5.

### 2) Example #2 - When all STAs are transferred to APs of a different Group at once.

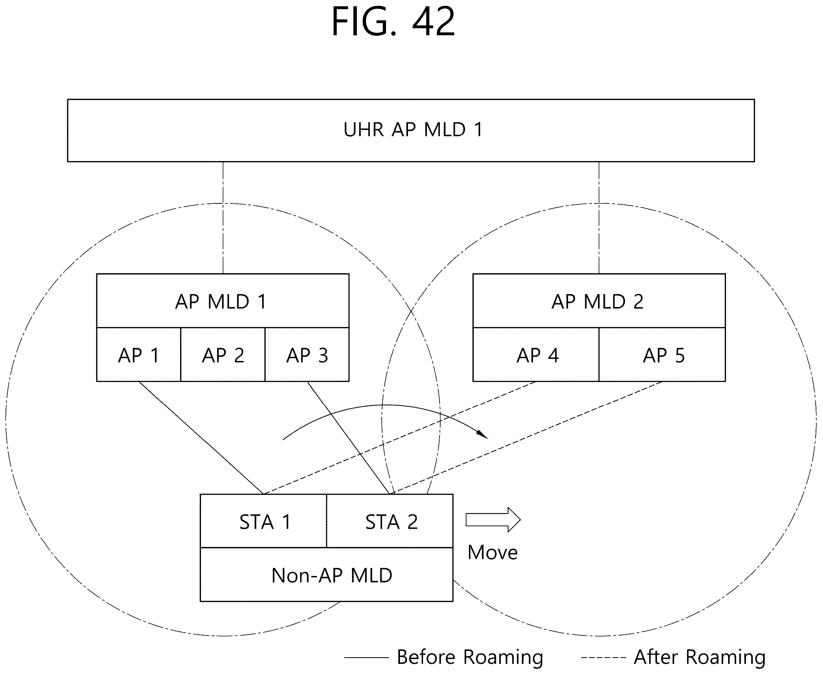

FIG. 42 illustrates Example 2 of the MLD Roaming procedure.

FIG. 42 illustrates a scenario where all STAs simultaneously move to APs in different groups. For example, STA 1 simultaneously roams from AP 1 to AP 3, and STA 2 simultaneously roams from AP 3 to AP 5.

In this example, STA 1 and AP 1, or STA2 and AP 3, as described above, can exchange MLD Roaming Request/Response messages. The MLD Roaming Request will indicate the UHR AP MLD ID (Optional), AP MLD ID, and Link ID for AP 4 and AP 5. AP 1 or AP 3 will then indicate whether to accept the request and include information about AP 4 and AP 5 in the Basic Multi-link IE.

This example reduces frame overhead compared to Example 1 and, depending on the AP MLD Roaming domain structure, can reduce data latency. For example, if there is an Anchor AP that manages data reception from DS and MLD Roaming in AP MLD, if this Anchor AP accepts the MLD Roaming Request, the data path can be set for Roaming in advance.

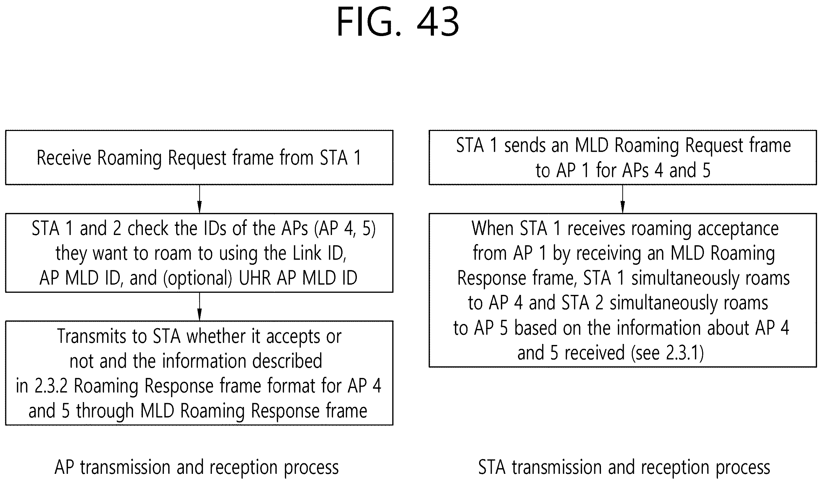

FIG. 43 illustrates the operation process of Example 2 of the MLD Roaming procedure.

Referring to FIG. 43, the AP transmission and reception process is as follows.

AP 1 receives a Roaming Request frame from STA 1. The STA determines the ID of the AP to which it wishes to roam using the Link ID, AP MLD ID, and UHR AP MLD ID (optional). AP 1 transmits to STA 1 an MLD Roaming Response frame indicating whether it has accepted the roaming request and includes information about APs 4 and 5 described in Section 2.3.2. Roaming Response Frame Format.

Referring to FIG. 43, the STA transmission and reception process is as follows.

STA 1 transmits to AP 1 an MLD Roaming Request frame for APs 4 and 5. If STA 1 receives roaming acceptance from AP 1 through the MLD Roaming Response frame, STA 1 roams to AP 4 based on the received information about AP 4. After STA 1's roaming is finished, STA 2 also roams to AP 4 based on whether it accepts AP 5 received through STA 1 and the information about APs 4 and 5.

### 3) Example #3 - Procedure to perform temporary add and delete respectively (If using Timer, these procedures can be performed simultaneously)

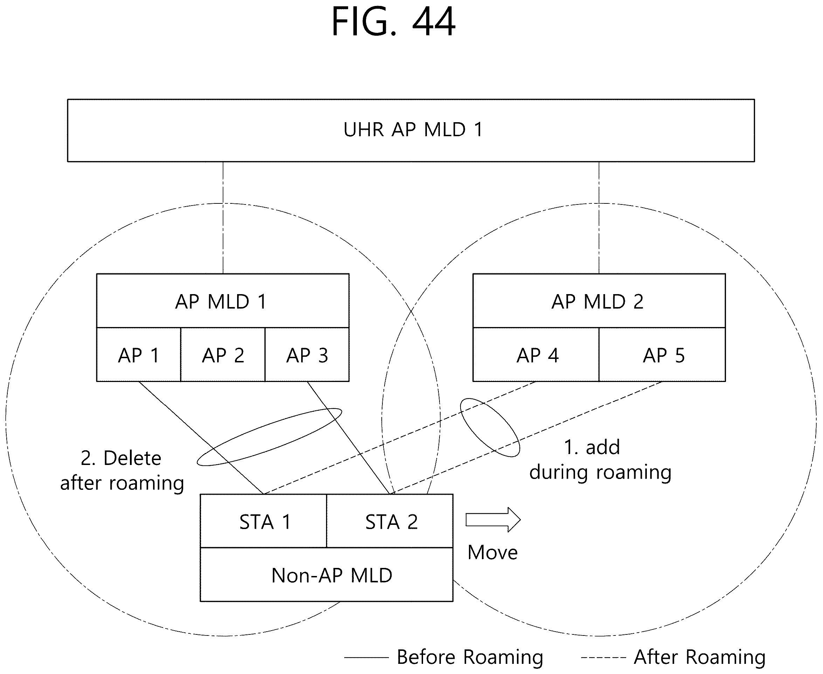

FIG. 44 illustrates Example 3 of the MLD Roaming procedure.

FIG. 44 illustrates an example in which STA 1 first temporarily adds AP 4 and STA 2 temporarily adds AP 5, and then deletes AP 1 and AP 3, respectively.

In this example, for the temporary add described above, STA 1 and AP 1, or STA 2 and AP 3, can first exchange MLD Roaming Request/Response. At this time, the MLD Roaming Request will indicate the UHR AP MLD ID (Optional), AP MLD ID, and Link ID for AP 4 and AP 5, and AP 1 or AP 3 will include information about AP 4 and AP 5 in the Basic Multi-link IE along with its acceptance decision. Upon completion of this process, STA 1 will be temporarily connected to AP 1 and AP 4, and STA 2 will be temporarily connected to AP 3 and AP 5. STA 1 can transmit or receive data from AP 1 and AP 4. That is, when exchanging frames with AP 1, frame exchange with AP 4 is not possible. Next, STA 1 performs a temporary delete (or delete) operation on AP 1, STA 2, and AP 3. Through this procedure, STA 1 completes roaming to AP 4, and STA 2 completes roaming to AP 5.

The above example is a procedure that performs temporary add and delete respectively. If a timer is used here, these procedures can be performed simultaneously. For example, STA 1 and AP 1 or STA 2 and AP 3 can exchange MLD Roaming Request/Response. At this time, in the MLD Roaming Request, AP 1 and AP 3 simultaneously request Delete (or Temporary Delete), and AP 4 and AP 5 request Temporary add. At this time, the MLD Roaming Timer presented above is set. As mentioned above, non-AP MLD or AP MLD can set this through the MLD Roaming Response. After the MLD Roaming Response is successfully transmitted, the timer starts running, and when the timer expires, the AP 1 link is deleted from STA 1, and AP 4 is fully connected, and AP 3 is deleted from STA 2, and AP 5 is fully connected.

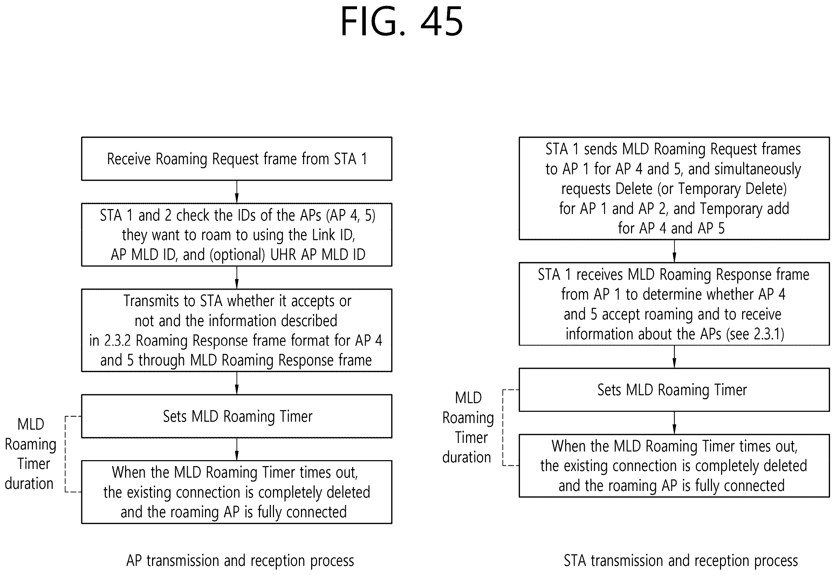

FIG. 45 illustrates the operation process of Example 3 of the MLD Roaming procedure.

Referring to FIG. 45, the AP transmission and reception process is as follows.

AP 1 receives a Roaming Request frame from STA 1. The STA determines the ID of the AP to which it wishes to roam using the Link ID, AP MLD ID, and UHR AP MLD ID (optional). AP 1 transmits to STA 1 an MLD Roaming Response frame, indicating whether it accepts the frame and including information about APs 4 and 5 described in Section 2.3.2. Roaming Response Frame Format. AP 1 sets an MLD Roaming Timer. When the MLD Roaming Timer times out, the existing connection is completely deleted and the roamed AP is fully connected.

Referring to FIG. 45, the STA transmission and reception process is as follows.

STA 1 transmits an MLD Roaming Request frame for APs 4 and 5 to AP 1. When STA 1 receives roaming acceptance from AP 1 through the MLD Roaming Response frame, it roams to AP 4 based on the information about AP 4 it received. After STA 1's roaming is complete, STA2 also roams to AP 4 based on whether it accepted AP 5 received from STA 1 and the information about APs 4 and 5. STA 1 sets the MLD Roaming Timer. At this time, when the MLD Roaming Timer times out, the existing connection is completely deleted and the roamed AP is fully connected.

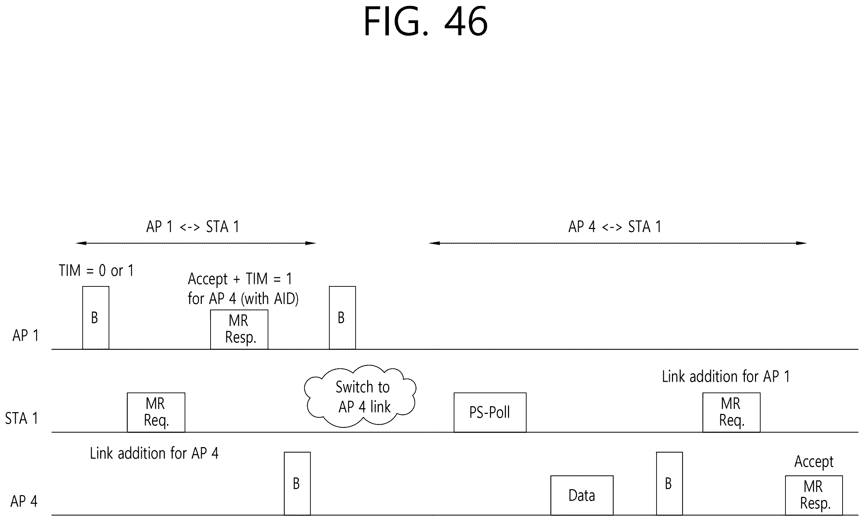

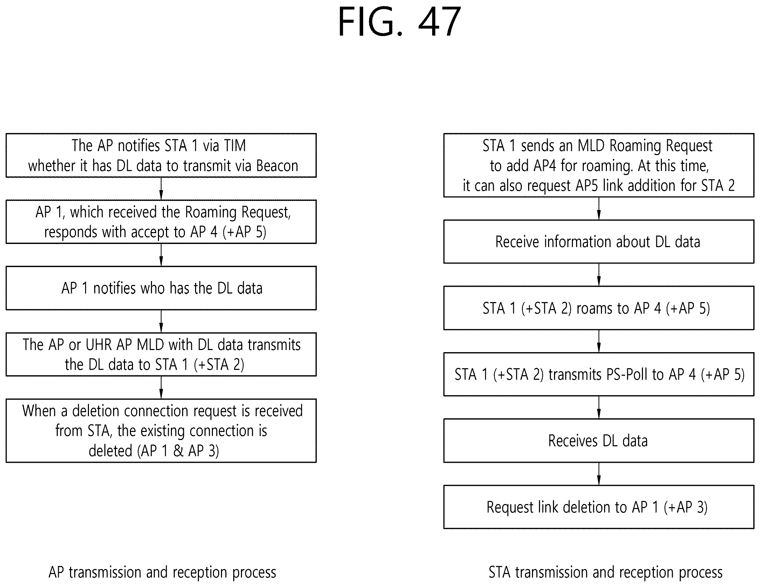

Additionally, in order for STA 1 to completely transition from AP 1 to AP 4, processes such as those in FIGS. 46 and 47 are required.

FIG. 46 illustrates an example of MLD Roaming using TIM.

AP 1 notifies STA 1 via TIM whether it has DL data to transmit via Beacon. At this time, STA 1 transmits MLD Roaming Request to add AP 4 for roaming. Note that this example only includes STA 1, but it can also request link addition of AP 5 to STA 2, as shown in FIG. 44. AP 1 confirms this and responds with accept to AP 4. However, STA 1 may have received information that it is not currently buffering DL data from the latest Beacon of AP 1, or may have buffered it but not yet received it. Therefore, AP 1 can notify STA 1 that AP 4 or UHR AP MLD has the DL data. In other words, when switching to AP 4, STA 1 can receive DL data from AP 4 through PS-poll transmission without waiting for the Beacon to be received. To achieve this, additional information needs to be indicated in the MLD Roaming Response frame, which is as follows:
-> TIM (Traffic Indication Map) field (e.g., 1 bit): This indicates that the corresponding AP or AP MLD is currently buffering DL data for the requesting STA.

From an MLD-level perspective, if the UHR AP MLD indicates that it is buffering DL data for the requesting STA, the TIM field can be included in the MLD Roaming Response frame body or Common Info field.

From the AP perspective, for example, if AP 4 indicates that it has DL data before switching to AP 4, the TIM field can be included in the Link Info field.

Meanwhile, an STA (e.g., STA 1) can additionally use the MLD Roaming Timer of the MLD Roaming Response frame to determine the time to switch. For example, if there is still a lot of time left until it receives data from the AP to which it is currently roaming (e.g., AP 4) before switching, STA 1 can first receive DL data from the currently connected AP (e.g., AP 1) through PS-Poll (if necessary) and then switch. Alternatively, if there is still time to receive data from AP 4 even if it switches immediately, STA 1 can switch immediately.

FIG. 47 illustrates the operation process of the MLD Roaming procedure using TIM.

Referring to FIG. 47, the AP transmission and reception process is as follows.

AP 1 notifies STA 1 via Beacon whether it has DL data to transmit via TIM. Upon receiving the Roaming Request, AP 1 responds with "Accept" to AP 4 (+AP 5). AP 1 then informs STA 1 of the DL data. The AP with the DL data, or the UHR AP MLD, transmits the DL data to STA 1 (+STA 2). Upon receiving a connection deletion request from the STA, AP 1 (+AP 3) deletes the existing connection.

Referring to FIG. 47, the STA transmission and reception process is as follows.

STA 1 performs roaming and transmits an MLD Roaming Request to add AP 4. At this time, it can also request the addition of a link from AP 5 to STA 2. STA 1 receives information about the DL data. STA 1 (+STA 2) roams to AP 4 (+AP 5). STA 1 (+STA 2) transmits a PS-Poll to AP 4 (+AP 5) and receives the corresponding DL data. STA 1 (+STA 2) requests link deletion from AP 1 (+AP 3).

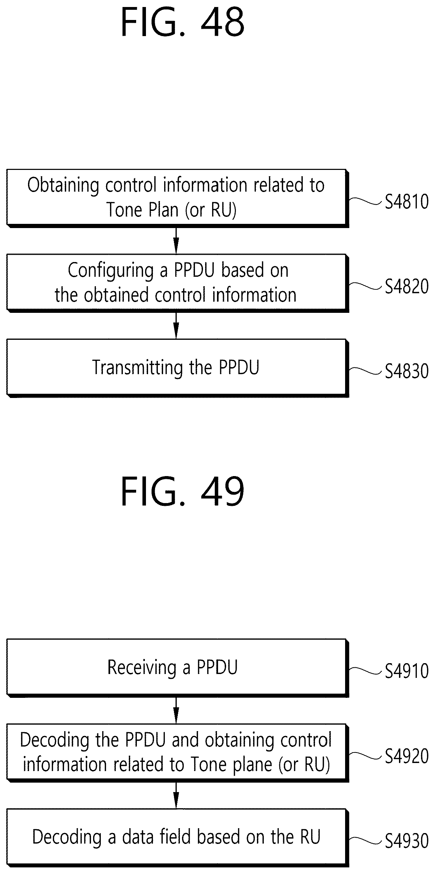

FIG. 48 is a flowchart illustrating the operation of a transmitting device according to the present embodiment.

The example of FIG. 48 may be performed by a transmitting device (AP and/or non-AP STA).

Some of each step (or detailed sub-step to be described later) of the example of FIG. 48 may be skipped/omitted.

Through step S4810, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S4820, the transmitting device may construct/generate a PPDU based on the acquired control information. Configuring/generating the PPDU may include configuring/generating each field of the PPDU. That is, step S4820 includes configuring the EHT-SIG field including control information about the tone plan. That is, step S4820 includes configuring a field including control information (e.g., N bitmap) indicating the size/position of the RU; and/or configuring a field including an identifier of an STA receiving the RU (e.g., AID).

Also, step S4820 may include generating an STF/LTF sequence transmitted through a specific RU. The STF/LTF sequence may be generated based on a preset STF generation sequence/LTF generation sequence.

Also, step S4820 may include generating a data field (i.e., MPDU) transmitted through a specific RU.

The transmitting device may transmit the PPDU constructed through step S4820 to the receiving device based on step S4830.

While performing step S4830, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 49 is a flowchart illustrating the operation of a receiving device according to the present embodiment.

The aforementioned PPDU may be received according to the example of FIG. 49.

The example of FIG. 49 may be performed by a receiving apparatus/device (AP and/or non-AP STA).

Some of each step (or detailed sub-step to be described later) of the example of FIG. 49 may be skipped/omitted.

The receiving device (receiving STA) may receive all or part of the PPDU through step S4910. The received signal may be in the form of FIG. 5.

A sub-step of step S4910 may be determined based on step S4830 of FIG. 48. That is, in step S4910, an operation of restoring the result of the CSD, Spatial Mapping, IDFT/IFFT operation, and GI insertion operation applied in step S4830 may be performed.

In step S4920, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S4930, the receiving device may decode the remaining part of the PPDU based on information about the tone plan (i.e., RU) acquired through step S4920. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S4930 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 49.

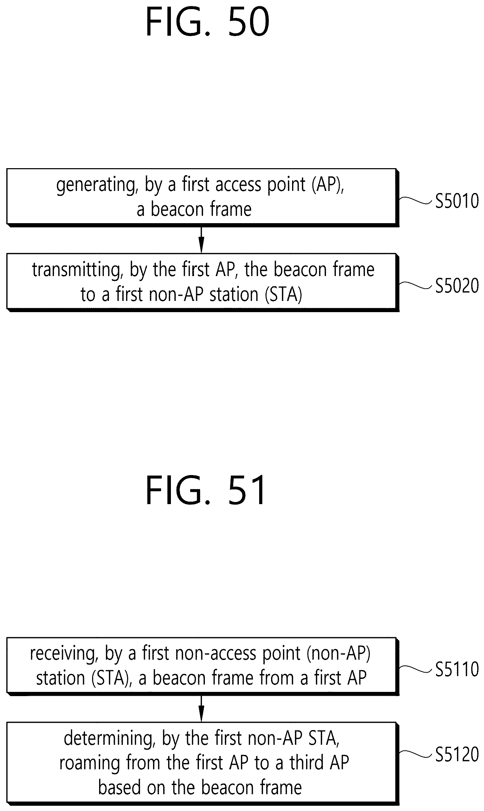

FIG. 50 is a flowchart illustrating a procedure for determining MLD roaming based on whether an AP is collocation with another AP according to the present embodiment.

The example of FIG. 50 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 50 is performed at a transmitting STA, which may correspond to an access point (AP). The receiving STA of FIG. 50 may correspond to at least one STA (station).

This embodiment proposes a method for determining MLD roaming based on whether the current AP is collocated with another AP. The MLD roaming allows seamless movement from one AP to another without any disconnection between the AP and the STA. In particular, this embodiment effectively prevents unnecessary roaming to APs by identifying information about APs that are physically close and therefore do not require the MLD roaming.

In step S5010, a first access point (AP) generates a beacon frame.

In step S5020, the first AP transmits the beacon frame to a first non-AP station (STA).

The first AP operating on a first link and a second AP operating on a second link are affiliated with a first AP MLD. The first non-AP STA operating on the first link and a second non-AP STA operating on the second link are affiliated with a first non-AP MLD.

The third AP is affiliated with a second AP MLD. The first and second AP MLDs are included in a roaming-enabled group.

The beacon frame includes a first indicator bit.

The first indicator bit includes information on whether the third AP is included in the same collocated AP set as the first AP. Based on the first and third APs being included in the same collocated AP set, the first and third APs may be determined to be physically adjacent to each other. Conversely, based on the first and third APs not being included in the same collocated AP set, the first and third APs may be determined to be physically non-adjacent.

The first indicator bit may be information on Collocation enabled or information on a Collocation ID. Based on the first indicator bit being set to 1, it may be determined that the third AP is included in the same collocated AP set as the first AP. Based on the first indicator bit being set to 0, it may be determined that the third AP is not included in the same collocated AP set as the first AP. Alternatively, it may be set vice versa.

Based on the third AP being included in the same collocated AP set as the first AP, the first non-AP STA may not perform roaming from the first AP to the third AP.

That is, the present embodiment proposes a method for confirming information on APs that are physically adjacent and do not require MLD roaming through a beacon frame. In particular, the present disclosure proposes a method for confirming whether the currently connected AP and another AP to be roamed are collocated by defining an indicator bit in the beacon frame. This has the effect of increasing the overall operational efficiency by preventing unnecessary roaming to other APs that are parallel to the currently connected AP.

Based on the third AP being not included in the same collocated AP set as the first AP, the first non-AP STA may transmit a multi-link device (MLD) roaming request frame to the first AP. The first non-AP STA may receive an MLD roaming response frame from the first AP. The first non-AP STA may perform the roaming from the first AP to the third AP based on the MLD roaming response frame.

The MLD roaming request frame may include a link identifier of the third AP, an identifier of the second AP MLD, and an identifier of the roaming-enabled group.

That is, based on the third AP being an AP adjacent to the first AP, the first non-AP STA may not transmit the MLD roaming request frame to the first AP. As a result, unnecessary roaming to the third AP may not be performed. Conversely, based on the third AP being an AP not adjacent to the first AP, the first non-AP STA may transmit the MLD roaming request frame to the first AP. That is, the roaming to the third AP may be performed through the MLD roaming request frame.

Additionally, the second non-AP STA may whether to roam from the second AP to a fourth AP based on the beacon frame. The fourth AP may further be affiliated with the second AP MLD.

Similarly, based on the fourth AP being included in the same collocated AP set as the second AP, the second non-AP STA may not perform roaming from the second AP to the fourth AP.

Based on the fourth AP not being included in the same collocated AP set as the second AP, the second non-AP STA may perform the roaming from the second AP to the fourth AP based on the MLD roaming response frame. The MLD roaming request frame may further include a link identifier of the fourth AP.

That is, based on the fourth AP being an AP adjacent to the second AP, the second non-AP STA may not receive the MLD roaming response frame from the second AP. As a result, unnecessary roaming to the fourth AP may not be performed. Conversely, based on the fourth AP being an AP not adjacent to the second AP, the second non-AP STA may receive the MLD roaming response frame from the second AP. That is, the roaming to the fourth AP may be performed through the MLD roaming response frame.

The first and second APs may be referred to as the Old AP (O_AP), Serving AP, or Current AP. The third and fourth APs may be referred to as the New AP (N_AP) or Target AP.

The roaming-enabled group may be referred to as a UHR AP MLD. The first and second AP MLDs are non-collocated, but are included in the same roaming-enabled group, so roaming (or movement) from an AP in the first AP MLD to an AP in the second AP MLD may be possible. The first and second APs in the first AP MLD are collocated. The third and fourth APs in the second AP MLD are also collocated.

In addition, the present embodiment proposes a method for performing MLD roaming that can seamlessly move from a specific AP to another AP based on an identifier of an AP to roam, an identifier of an AP MLD of the AP to roam, and an identifier of a group in which roaming is possible by exchanging an MLD roaming request frame and an MLD roaming response frame. This has an effect of resolving the problem of disconnection between AP and STA and packet loss and delay caused by the disconnection in the existing Fast BSS Transition (FT) method, and enabling seamless movement to another AP.

The MLD roaming request frame may be defined based on a Reconfiguration Multi-link Information Element (IE). The MLD roaming request frame may include a first common information field and a first link information field.

The first indicator bit, the identifier of the second AP MLD and the identifier of the roaming-enabled group may be included in the first common information field. The link identifiers of the third and fourth APs, the identifier of the second AP MLD, and the identifier of the roaming-enabled group may be included in the first link information field.

The first common information field may further include an MLD capabilities and operation subfield and an EML Capabilities subfield for performing the MLD roaming.

Based on the MLD roaming request frame further including a first Presence Bitmap subfield, the first Presence Bitmap subfield may include a subfield for a presence or absence of the identifier of the second AP MLD, a subfield for a presence or absence of the identifier of the roaming-enabled group, a subfield for a presence or absence of the MLD capabilities and operation subfield, and a subfield for a presence or absence of the EML Capabilities subfield.

Based on a value of a subfield in the first Presence Bitmap subfield, the first common information field may or may not include the identifier of the second AP MLD, the identifier of the roaming-enabled group, the MLD capabilities and operation subfield, and the EML Capabilities subfield.

The first link information may further include a Link ID subfield within a STA Control field. The link identifiers of the third and fourth APs may be included in the Link ID subfield.

The MLD roaming response frame may be defined based on a basic multi-link IE. The MLD roaming response frame may include a second common information field and a second link information field.

The first indicator bit, the identifier of the second AP MLD and the identifier of the roaming-enabled group may be included in the second common information field. The link identifiers of the third and fourth APs, the identifier of the second AP MLD, and the identifier of the roaming-enabled group may be included in the second link information field.

Based on the MLD roaming response frame further including a second Presence Bitmap subfield, the second Presence Bitmap subfield may include a subfield for a presence or absence of the identifier of the second AP MLD and a subfield for a presence or absence of the identifier of the roaming-enabled group.

Based on a value of a subfield in the second Presence Bitmap subfield, the identifier of the second AP MLD and the identifier of the roaming-enabled group may or may not be included in the first common information field.

The second link information may further include a Link ID subfield within a STA Control field. The link identifiers of the third and fourth APs may be included in the Link ID subfield.

The first and second non-AP STAs may set an MLD roaming timer.

Based on the MLD roaming timer expiring, the first non-AP STA may delete a connection for the first link with the first AP, and the second non-AP STA may delete a connection for the second link with the second AP. As a result, the first non-AP STA may be fully connected to the third AP, and the second non-AP STA may be fully connected to the fourth AP.

Information on the MLD roaming timer may be further included in the first common information field or the first link information field. Information on the MLD roaming timer may be further included in the second common information field or the second link information field.

In addition, the first common information field or the first link information field may further include a type subfield. When the type subfield is set to Type 0, a non-AP STA may request additional link connection with an AP in the AP MLD. When the type subfield is set to Type 1, a non-AP STA may delete a current link connection with an AP in the AP MLD. When the type subfield is set to Type 2, a non-AP STA may delete a current link connection with an AP in the AP MLD. When the type subfield is set to Type 3, a non-AP STA may request additional connection with an AP other than the currently connected AP in the AP MLD.

Additionally, the beacon frame may be broadcast.

The beacon frame may include information on the third and fourth APs.

The information on the third and fourth APs may include second and third indicator bits and the identifier of the roaming-enabled group.

The second indicator bit may include information on whether the third and fourth APs are capable of the roaming. The third indicator bit may include information on whether the third and fourth APs are capable of temporarily adding or removing links.

Based on a value of the identifier of the roaming-enabled group being 0, the third and fourth APs are recognized as APs belonging to the same group as the roaming-enabled group.

Additionally, the first non-AP STA may determine the third and fourth APs as APs to roam based on the beacon frame.

The beacon frame may be defined based on a Reduced Neighbor Report (RNR) Information Element (IE).

The RNR IE may include an MLD roaming parameter subfield. The MLD roaming parameter subfield may include the first to third indicator bits and the identifier of the roaming-enabled group. The first indicator bit may further include information on whether the third AP is an AP adjacent to the first AP and information on whether the fourth AP is an AP adjacent to the second AP.

The beacon frame may further include a Traffic Indication Map (TIM) field. The TIM field may include information on whether there is downlink (DL) data to be transmitted to the first non-AP STA.

For example, if the TIM field is set to 1, DL data to be transmitted to the first non-AP STA may be buffered. If the TIM field is set to 0, DL data to be transmitted to the first non-AP STA may not be buffered. The TIM field may also be included in the MLD roaming response frame.

After roaming from the first AP to the third AP is completed, the first non-AP STA may receive the DL data from the third AP. The first non-AP STA may delete a connection for the first link with the first AP.

FIG. 51 is a flowchart illustrating a procedure for determining MLD roaming based on whether an STA is collocation with another AP according to the present embodiment.

The example of FIG. 51 may be performed in a network environment that supports a next-generation wireless LAN system (Ultra High Reliability (UHR) wireless LAN system or next Wi-Fi). The next-generation wireless LAN system is an improved version of the 802.1 1be system and can satisfy backward compatibility with the 802.1 1be system.

An example of FIG. 51 is performed at a receiving STA, which may correspond to at least one station (STA). The transmitting STA of FIG. 51 may correspond to an access point (AP).

This embodiment proposes a method for determining MLD roaming based on whether the current AP is collocated with another AP. The MLD roaming allows seamless movement from one AP to another without any disconnection between the AP and the STA. In particular, this embodiment effectively prevents unnecessary roaming to APs by identifying information about APs that are physically close and therefore do not require the MLD roaming.

In step S5110, a first non-access point station (non-AP STA) receives a beacon frame from a first AP.

In step S5120, the first non-AP STA determines whether to roam from the first AP to a third AP based on the beacon frame.

The first AP operating on a first link and a second AP operating on a second link are affiliated with a first AP MLD. The first non-AP STA operating on the first link and a second non-AP STA operating on the second link are affiliated with a first non-AP MLD.

The third AP is affiliated with a second AP MLD. The first and second AP MLDs are included in a roaming-enabled group.

The beacon frame includes a first indicator bit.

The first indicator bit includes information on whether the third AP is included in the same collocated AP set as the first AP. Based on the first and third APs being included in the same collocated AP set, the first and third APs may be determined to be physically adjacent to each other. Conversely, based on the first and third APs not being included in the same collocated AP set, the first and third APs may be determined to be physically non-adjacent.

The first indicator bit may be information on Collocation enabled or information on a Collocation ID. Based on the first indicator bit being set to 1, it may be determined that the third AP is included in the same collocated AP set as the first AP. Based on the first indicator bit being set to 0, it may be determined that the third AP is not included in the same collocated AP set as the first AP. Alternatively, it may be set vice versa.

Based on the third AP being included in the same collocated AP set as the first AP, the first non-AP STA may not perform roaming from the first AP to the third AP.

That is, the present embodiment proposes a method for confirming information on APs that are physically adjacent and do not require MLD roaming through a beacon frame. In particular, the present disclosure proposes a method for confirming whether the currently connected AP and another AP to be roamed are collocated by defining an indicator bit in the beacon frame. This has the effect of increasing the overall operational efficiency by preventing unnecessary roaming to other APs that are parallel to the currently connected AP.

Based on the third AP being not included in the same collocated AP set as the first AP, the first non-AP STA may transmit a multi-link device (MLD) roaming request frame to the first AP. The first non-AP STA may receive an MLD roaming response frame from the first AP. The first non-AP STA may perform the roaming from the first AP to the third AP based on the MLD roaming response frame.

The MLD roaming request frame may include a link identifier of the third AP, an identifier of the second AP MLD, and an identifier of the roaming-enabled group.

That is, based on the third AP being an AP adjacent to the first AP, the first non-AP STA may not transmit the MLD roaming request frame to the first AP. As a result, unnecessary roaming to the third AP may not be performed. Conversely, based on the third AP being an AP not adjacent to the first AP, the first non-AP STA may transmit the MLD roaming request frame to the first AP. That is, the roaming to the third AP may be performed through the MLD roaming request frame.

Additionally, the second non-AP STA may whether to roam from the second AP to a fourth AP based on the beacon frame. The fourth AP may further be affiliated with the second AP MLD.

Similarly, based on the fourth AP being included in the same collocated AP set as the second AP, the second non-AP STA may not perform roaming from the second AP to the fourth AP.

Based on the fourth AP not being included in the same collocated AP set as the second AP, the second non-AP STA may perform the roaming from the second AP to the fourth AP based on the MLD roaming response frame. The MLD roaming request frame may further include a link identifier of the fourth AP.

That is, based on the fourth AP being an AP adjacent to the second AP, the second non-AP STA may not receive the MLD roaming response frame from the second AP. As a result, unnecessary roaming to the fourth AP may not be performed. Conversely, based on the fourth AP being an AP not adjacent to the second AP, the second non-AP STA may receive the MLD roaming response frame from the second AP. That is, the roaming to the fourth AP may be performed through the MLD roaming response frame.

The first and second APs may be referred to as the Old AP (O_AP), Serving AP, or Current AP. The third and fourth APs may be referred to as the New AP (N_AP) or Target AP.

The roaming-enabled group may be referred to as a UHR AP MLD. The first and second AP MLDs are non-collocated, but are included in the same roaming-enabled group, so roaming (or movement) from an AP in the first AP MLD to an AP in the second AP MLD may be possible. The first and second APs in the first AP MLD are collocated. The third and fourth APs in the second AP MLD are also collocated.

In addition, the present embodiment proposes a method for performing MLD roaming that can seamlessly move from a specific AP to another AP based on an identifier of an AP to roam, an identifier of an AP MLD of the AP to roam, and an identifier of a group in which roaming is possible by exchanging an MLD roaming request frame and an MLD roaming response frame. This has an effect of resolving the problem of disconnection between AP and STA and packet loss and delay caused by the disconnection in the existing Fast BSS Transition (FT) method, and enabling seamless movement to another AP.

The MLD roaming request frame may be defined based on a Reconfiguration Multi-link Information Element (IE). The MLD roaming request frame may include a first common information field and a first link information field.

The first indicator bit, the identifier of the second AP MLD and the identifier of the roaming-enabled group may be included in the first common information field. The link identifiers of the third and fourth APs, the identifier of the second AP MLD, and the identifier of the roaming-enabled group may be included in the first link information field.

The first common information field may further include an MLD capabilities and operation subfield and an EML Capabilities subfield for performing the MLD roaming.

Based on the MLD roaming request frame further including a first Presence Bitmap subfield, the first Presence Bitmap subfield may include a subfield for a presence or absence of the identifier of the second AP MLD, a subfield for a presence or absence of the identifier of the roaming-enabled group, a subfield for a presence or absence of the MLD capabilities and operation subfield, and a subfield for a presence or absence of the EML Capabilities subfield.

Based on a value of a subfield in the first Presence Bitmap subfield, the first common information field may or may not include the identifier of the second AP MLD, the identifier of the roaming-enabled group, the MLD capabilities and operation subfield, and the EML Capabilities subfield.

The first link information may further include a Link ID subfield within a STA Control field. The link identifiers of the third and fourth APs may be included in the Link ID subfield.

The MLD roaming response frame may be defined based on a basic multi-link IE. The MLD roaming response frame may include a second common information field and a second link information field.

The first indicator bit, the identifier of the second AP MLD and the identifier of the roaming-enabled group may be included in the second common information field. The link identifiers of the third and fourth APs, the identifier of the second AP MLD, and the identifier of the roaming-enabled group may be included in the second link information field.

Based on the MLD roaming response frame further including a second Presence Bitmap subfield, the second Presence Bitmap subfield may include a subfield for a presence or absence of the identifier of the second AP MLD and a subfield for a presence or absence of the identifier of the roaming-enabled group.

Based on a value of a subfield in the second Presence Bitmap subfield, the identifier of the second AP MLD and the identifier of the roaming-enabled group may or may not be included in the first common information field.

The second link information may further include a Link ID subfield within a STA Control field. The link identifiers of the third and fourth APs may be included in the Link ID subfield.

The first and second non-AP STAs may set an MLD roaming timer.

Based on the MLD roaming timer expiring, the first non-AP STA may delete a connection for the first link with the first AP, and the second non-AP STA may delete a connection for the second link with the second AP. As a result, the first non-AP STA may be fully connected to the third AP, and the second non-AP STA may be fully connected to the fourth AP.

Information on the MLD roaming timer may be further included in the first common information field or the first link information field. Information on the MLD roaming timer may be further included in the second common information field or the second link information field.

In addition, the first common information field or the first link information field may further include a type subfield. When the type subfield is set to Type 0, a non-AP STA may request additional link connection with an AP in the AP MLD. When the type subfield is set to Type 1, a non-AP STA may delete a current link connection with an AP in the AP MLD. When the type subfield is set to Type 2, a non-AP STA may delete a current link connection with an AP in the AP MLD. When the type subfield is set to Type 3, a non-AP STA may request additional connection with an AP other than the currently connected AP in the AP MLD.

Additionally, the beacon frame may be broadcast.

The beacon frame may include information on the third and fourth APs.

The information on the third and fourth APs may include second and third indicator bits and the identifier of the roaming-enabled group.

The second indicator bit may include information on whether the third and fourth APs are capable of the roaming. The third indicator bit may include information on whether the third and fourth APs are capable of temporarily adding or removing links.

Based on a value of the identifier of the roaming-enabled group being 0, the third and fourth APs are recognized as APs belonging to the same group as the roaming-enabled group.

Additionally, the first non-AP STA may determine the third and fourth APs as APs to roam based on the beacon frame.

The beacon frame may be defined based on a Reduced Neighbor Report (RNR) Information Element (IE).

The RNR IE may include an MLD roaming parameter subfield. The MLD roaming parameter subfield may include the first to third indicator bits and the identifier of the roaming-enabled group. The first indicator bit may further include information on whether the third AP is an AP adjacent to the first AP and information on whether the fourth AP is an AP adjacent to the second AP.

The beacon frame may further include a Traffic Indication Map (TIM) field. The TIM field may include information on whether there is downlink (DL) data to be transmitted to the first non-AP STA.

For example, if the TIM field is set to 1, DL data to be transmitted to the first non-AP STA may be buffered. If the TIM field is set to 0, DL data to be transmitted to the first non-AP STA may not be buffered. The TIM field may also be included in the MLD roaming response frame.

After roaming from the first AP to the third AP is completed, the first non-AP STA may receive the DL data from the third AP. The first non-AP STA may delete a connection for the first link with the first AP.

### < Device configuration>

The technical features of the present disclosure may be applied to various devices and methods. For example, the technical features of the present disclosure may be performed/supported through the device(s) of FIG. 1 and/or FIG. 14. For example, the technical features of the present disclosure may be applied to only part of FIG. 1 and/or FIG. 14. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 14. For example, the device according to the present disclosure receives a beacon frame from a first AP; and determines whether to roam from the first AP to a third AP based on the beacon frame.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a beacon frame from a first AP; and determining whether to roam from the first AP to a third AP based on the beacon frame. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 14. Meanwhile, the CRM of the present disclosure may be the memory 112, 122 of FIG. 1, the memory 620 of FIG. 14, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a first non-access point station (non-AP STA), a beacon frame from a first AP; and
determining, by the first non-AP STA, whether to roam from the first AP to a third AP based on the beacon frame,
wherein the first AP operating on a first link and a second AP operating on a second link are affiliated with a first AP MLD,
wherein the first non-AP STA operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.

2. The method of claim 1, wherein based on the third AP not being included in the same collocated AP set as the first AP, further comprising:
transmitting, by the first non-AP STA, a multi-link device (MLD) roaming request frame to the first AP;
receiving, by the first non-AP STA, an MLD roaming response frame from the first AP; and
performing, by the first non-AP STA, the roaming from the first AP to the third AP based on the MLD roaming response frame,
wherein the MLD roaming request frame includes a link identifier of the third AP, an identifier of the second AP MLD, and an identifier of the roaming-enabled group.

3. The method of claim 2, further comprising:
determining, by the second non-AP STA, whether to roam from the second AP to a fourth AP based on the beacon frame,
wherein the fourth AP is further affiliated with the second AP MLD, and
wherein based on the fourth AP being included in the same collocated AP set as the second AP, the second non-AP STA does not perform roaming from the second AP to the fourth AP.

4. The method of claim 3, wherein based on the fourth AP not being included in the same collocated AP set as the second AP, further comprising:
performing, by the second non-AP STA, the roaming from the second AP to the fourth AP based on the MLD roaming response frame,
wherein the MLD roaming request frame further includes a link identifier of the fourth AP.

5. The method of claim 4, wherein the MLD roaming request frame is defined based on a Reconfiguration Multi-link Information Element (IE),
wherein the MLD roaming request frame includes a first common information field and a first link information field,
wherein the first indicator bit, the identifier of the second AP MLD and the identifier of the roaming-enabled group are included in the first common information field,
wherein the link identifiers of the third and fourth APs, the identifier of the second AP MLD, and the identifier of the roaming-enabled group are included in the first link information field.

6. The method of claim 5, wherein the MLD roaming response frame is defined based on a basic multi-link IE,
wherein the MLD roaming response frame includes a second common information field and a second link information field,
wherein the first indicator bit, the identifier of the second AP MLD and the identifier of the roaming-enabled group are included in the second common information field, and
wherein the link identifiers of the third and fourth APs, the identifier of the second AP MLD, and the identifier of the roaming-enabled group are included in the second link information field.

7. The method of claim 6, further comprising:
setting, by the first and second non-AP STAs, an MLD roaming timer;
based on the MLD roaming timer expiring, deleting, by the first non-AP STA, a connection for the first link with the first AP; and deleting, by the second non-AP STA, a connection for the second link with the second AP,
wherein information on the MLD roaming timer is further included in the first common information field or the first link information field, and
wherein information on the MLD roaming timer is further included in the second common information field or the second link information field.

8. The method of claim 3, wherein the beacon frame includes information on the third and fourth APs,
wherein the information on the third and fourth APs includes second and third indicator bits and the identifier of the roaming-enabled group,
wherein the second indicator bit includes information on whether the third and fourth APs are capable of the roaming,
wherein the third indicator bit includes information on whether the third and fourth APs are capable of temporarily adding or removing links, and
wherein based on a value of the identifier of the roaming-enabled group being 0, the third and fourth APs are recognized as APs belonging to the same group as the roaming-enabled group.

9. The method of claim 8, further comprising:
determining, by the first non-AP STA, the third and fourth APs as APs to roam based on the beacon frame,
wherein the beacon frame is defined based on a Reduced Neighbor Report (RNR) Information Element (IE),
wherein the RNR IE includes an MLD roaming parameter subfield, and
wherein the MLD roaming parameter subfield includes the first to third indicator bits and the identifier of the roaming-enabled group, and
wherein the first indicator bit further includes information on whether the third AP is an AP adjacent to the first AP and information on whether the fourth AP is an AP adjacent to the second AP.

10. The method of claim 9, wherein based on the third AP being an AP adjacent to the first AP, the first non-AP STA does not transmit the MLD roaming request frame to the first AP,
wherein based on the third AP being an AP not adjacent to the first AP, the first non-AP STA transmits the MLD roaming request frame to the first AP,
wherein based on the fourth AP being an AP adjacent to the second AP, the second non-AP STA does not receive the MLD roaming response frame from the second AP, and
wherein based on the fourth AP being an AP not adjacent to the second AP, the second non-AP STA receives the MLD roaming response frame from the second AP.

11. The method of claim 9,
wherein the beacon frame further includes a Traffic Indication Map (TIM) field,
wherein the TIM field includes information on whether there is downlink (DL) data to be transmitted to the first non-AP STA,
further comprising:
after roaming from the first AP to the third AP is completed, receiving, by the first non-AP STA, the DL data from the third AP; and
deleting, by the first non-AP STA, a connection for the first link with the first AP.

12. A first non-access point station (non-AP STA) in a wireless local area network (WLAN) system, the first non-AP STA comprising:
a memory;
a transceiver; and
a processor being operatively connected to the memory and the transceiver,
wherein the processor is configured to:
receive a beacon frame from a first AP; and
determine whether to roam from the first AP to a third AP based on the beacon frame,
wherein the first AP operating on a first link and a second AP operating on a second link are affiliated with a first AP MLD,
wherein the first non-AP STA operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.

13. A method in a wireless local area network (WLAN) system, the method comprising:
generating, by a first access point (AP), a beacon frame; and
transmitting, by the first AP, the beacon frame to a first non-AP station (STA),
wherein the first AP operating on a first link and a second AP operating on a second link are affiliated with a first AP MLD,
wherein the first non-AP STA operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.

14. The method of claim 13, wherein based on the third AP not being included in the same collocated AP set as the first AP, further comprising:
receiving, by the first AP, a multi-link device (MLD) roaming request frame from the first non-AP STA;
transmitting, by the first AP, an MLD roaming response frame to the first non-AP STA; and
the roaming from the first AP to the third AP by the first non-AP STA is performed based on the MLD roaming response frame,
wherein the MLD roaming request frame includes a link identifier of the third AP, an identifier of the second AP MLD, and an identifier of the roaming-enabled group.

15. The method of claim 14, wherein roaming from the second AP to a fourth AP by the second non-AP STA is determined based on the beacon frame,
wherein the fourth AP is further affiliated with the second AP MLD, and
wherein based on the fourth AP being included in the same collocated AP set as the second AP, the second non-AP STA does not perform the roaming from the second AP to the fourth AP.

16. The method of claim 15, wherein based on the fourth AP not being included in the same collocated AP set as the second AP, the roaming from the second AP to the fourth AP by the second non-AP STA is performed based on the MLD roaming response frame,
wherein the MLD roaming request frame further includes a link identifier of the fourth AP.

17. The method of claim 15, wherein the beacon frame is defined based on a Reduced Neighbor Report (RNR) Information Element (IE),
wherein the RNR IE includes an MLD roaming parameter subfield, and
wherein the MLD roaming parameter subfield includes the first to third indicator bits and the identifier of the roaming-enabled group, and
wherein the first indicator bit further includes information on whether the third AP is an AP adjacent to the first AP and information on whether the fourth AP is an AP adjacent to the second AP.

18. A first access point (AP) in a wireless local area network (WLAN) system, the first AP comprising:
a memory;
a transceiver; and
a processor being operatively connected to the memory and the transceiver,
wherein the processor is configured to:
generate a beacon frame; and
transmit the beacon frame to a first non-AP station (STA),
wherein the first AP operating on a first link and a second AP operating on a second link are affiliated with a first AP MLD,
wherein the first non-AP STA operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.

19. A computer readable medium including an instruction being executed by at least one processor and performing a method comprising the steps of:
receiving a beacon frame from a first AP; and
determining whether to roam from the first AP to a third AP based on the beacon frame,
wherein the first AP operating on a first link and a second AP operating on a second link are affiliated with a first AP MLD,
wherein the first non-AP station (STA) operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.

20. A device in a wireless local area network (WLAN) system, the device comprising:
a memory; and
a processor being operatively connected to the memory,
wherein the processor is configured to:
receive a beacon frame from a first AP; and
determine whether to roam from the first AP to a third AP based on the beacon frame,
wherein the first AP operating on a first link and a second AP operating on a second link are affiliated with a first AP MLD,
wherein the first non-AP station (STA) operating on the first link and a second non-AP STA operating on the second link are affiliated with a first non-AP MLD,
wherein the third AP is affiliated with a second AP MLD,
wherein the first and second AP MLDs are included in a roaming-enabled group,
wherein the beacon frame includes a first indicator bit,
wherein the first indicator bit includes information on whether the third AP is included in the same collocated AP set as the first AP, and
wherein based on the third AP being included in the same collocated AP set as the first AP, the first non-AP STA does not perform roaming from the first AP to the third AP.
